# EUROPÄISCHE PATENTSCHRIFT

(11) **EP 2 215 134 B1**
(45) Veröffentlichungstag und Bekanntmachung des Hinweises auf die Patenterteilung: **08.01.2014**
(21) Anmeldenummer: 08856076.8
(22) Anmeldetag: 21.11.2008
(51) Int. Cl.: C08F 220/58, C08F 220/26, C11D 1/00

(54) **VERMINDERUNG DER BIOFILMBILDUNG DURCH MULTIFUNKTIONELLE COPOLYMERE**
REDUCTION OF THE FORMATION OF BIOFILM BY MEANS OF MULTIFUNCTIONAL COPOLYMERS
RÉDUCTION DE LA FORMATION DE BIOFILM AU MOYEN DE COPOLYMÈRES MULTIFONCTIONNELS

(30) Priorität: 03.12.2007 DE 102007058342
(43) Veröffentlichungstag der Anmeldung: 11.08.2010
(73) Patentinhaber: Henkel AG & Co. KGaA, 40589 Düsseldorf (DE)
(72) Erfinder: STUMPE, Stefan, 40589 Düsseldorf (DE); WEIDE, Mirko, 40223 Düsseldorf (DE); BREVES, Roland, 40822 Mettmann (DE); WRUBBEL, Noelle, 40591 Düsseldorf (DE); LÜKEN, Matthias, 40479 Düsseldorf (DE); BOY, Julia, 45479 Mülheim an der Ruhr (DE)
(86) Internationale Anmeldenummer: PCT/EP2008/065972
(87) Internationale Veröffentlichungsnummer: WO 2009/071451

(56) Entgegenhaltungen:
- WO-A-02/43686
- WO-A-02/44224
- WO-A-02/44230
- WO-A-2006/005358
- DE-A1-102006 007 004
- US-A1- 2004 019 148

## Beschreibung

Die vorliegende Erfindung betrifft die Verwendung multifunktioneller Copolymere zur Verminderung der Anhaftung von Mikroorganismen und/oder zur Verminderung der Biofilmbildung an Oberflächen.

In unterschiedlichsten Bereichen besteht ein Bedarf, Mittel zur Verfügung zu haben, die die Adhäsion von Mikroorganismen und/oder die Ausbildung von Biofilmen verhindern.

So befinden sich etwa im Haushalt Schimmelpilze an verschiedensten Stellen, beispielsweise in der Küche oder in feuchten Räumen, wie etwa im Badezimmer. Schimmelpilze verursachen erhebliche Probleme dadurch, dass die von ihnen in die Raumluft abgegebenen Sporen häufig allergieerzeugend sind. Des Weiteren kann es im Haushalt durch Bakterien zur Ausbildung von geruchsintensiven und unästhetischen Biofilmen auf vielen Oberflächen, insbesondere in Rohrleitungen, kommen. Bei starker Biofilmbildung kann es hierbei zur Verstopfung der Rohre und anderer Fließsysteme kommen. Eine Bekämpfung der Pilze und Bakterien mit bioziden Wirkstoffen geht mit einem erhöhten Risiko der Resistenzbildung einher, so dass nach einiger Zeit neue antimikrobielle Substanzen gefunden werden müssen, die gegen diese resistent gewordenen Mikroorganismen wirken. Biozide sind außerdem ökologisch und toxikologisch nicht immer unbedenklich. Des Weiteren kann ein ausgebildeter Biofilm mit Hilfe von Bioziden oftmals nur unzureichend bekämpft werden.

Als weiterer Punkt zu nennen ist, dass empfindliche Textilien, wie etwa Seide oder Mikrofaser, immer häufiger zu Kleidungsstücken verarbeitet werden, die nur bei 30 oder 40°C gewaschen werden können. Dadurch werden Pilze, wie beispielsweise die humanpathogene Candida albicans, und Bakterien nicht abgetötet. Insbesondere nach einer Pilzinfektion kann es durch solche auf Kleidungsstücken haftenden, nicht abgetöteten Pilze zu einer Reinfektion kommen.

Weiterhin erkranken Gebissträger häufig an einer oralen Candidose (Soor). An der Oberfläche der Prothese haftende Pilzzellen können bei Kontakt die Schleimhäute besiedeln, die durch Druckstellen oft vorgeschädigt sind.

Um die Reinfektion durch an der Kleidung oder an Kunststoffoberflächen haftenden Mikroorganismen zu verhindern, wurden bisher vor allem antimikrobielle Substanzen eingesetzt, die entweder das Wachstum der Mikroorganismen hemmen (Biostatika) oder diese abtöten (Biozide). Nachteilig ist daran, dass solche z. B. in Wasch- und Reinigungsmitteln verwendeten Biozide oder Biostatika die Abwässer belasten und somit auch die mikrobiellen Klärstufen in den Kläranlagen in ihrer Funktion beeinträchtigen. Zudem wird der Selektionsdruck auf die Mikroorganismen zur Resistenzbildung stark erhöht, so dass nach einiger Zeit neue antimikrobielle Substanzen gefunden werden müssen, die gegen diese resistent gewordenen Mikroorganismen wirken. Es ist daher wünschenswert anstelle von biozid oder biostatisch wirkenden Substanzen biorepulsiv wirkende Substanzen zur Verfügung zu haben, die die Adhäsion verhindern, ohne die Mikroorganismen physiologisch zu beeinträchtigen.

Darüber hinaus kann die Verminderung der Anhaftung durch den verringerten Kontakt des menschlichen Körpers mit den Mikroorganismenzellen, beispielsweise der Atemwege mit Schimmelpilzsporen, auch zu einer Verminderung des allergieauslösenden Potentials führen.

Als weiterer wichtiger Applikationsbereich, bei dem die Adhäsion von Mikroorganismen eine entscheidende Rolle spielt, sind submerse Oberflächen im marinen Bereich zu nennen. Im Laufe der Zeit siedeln sich auf diesen in einer bestimmten Abfolge sessile Organismen an. In der Regel entsteht zunächst ein Biofilm aus Bakterien, Pilzen, Mikroalgen und Protozoen, auf dem sich anschließend größere Organismen wie insbesondere Algen ansiedeln können. Handelt es sich bei den besiedelten Oberflächen um solche von technischen Anlagen oder Schiffen, liegt die Notwendigkeit von Schutzmaßnahmen auf der Hand, denn die durch Besiedlung entstehende unebene Oberfläche erhöht den Reibungswiderstand und somit den Treibstoffverbrauch, außerdem korrodiert das besiedelte Material leichter. Die bisher verwendeten organozinnhaltigen Antifoulinganstriche erwiesen sich zwar als sehr effizient aber auch hochtoxisch und unspezifisch. Ihre Applikation wurde ab 2003 in der "International Convention on the control of harmful Antifouling Systems" untersagt, ab 2008 besteht ein Nutzungsverbot. Dies führte zu einem verstärkten Interesse an der Entwicklung umweltverträglicher Antifoulingtechniken.

Aufgabe der vorliegenden Erfindung war es daher, ein Verfahren zur Verfügung zu stellen, um gezielt die Anhaftung von Mikroorganismen an Oberflächen zu vermindern und/oder die Ausbildung von Biofilmen zu hemmen, nach Möglichkeit ohne diese Oberflächen oder die Abwässer mit bioziden und/oder biostatischen Wirkstoffen zu belasten.

Überraschenderweise wurde nun gefunden, dass auf einfache Weise durch bestimmte Copolymere von funktionellen Monomeren mit ethylenisch ungesättigter Gruppe die Adhäsion von Mikroorganismen an Oberflächen und insbesondere die Biofilmbildung vermindert werden kann. Dies kann etwa dadurch erreicht werden, dass diese Copolymere in einen Reiniger oder in ein Ausrüstungsmittel eingebracht werden, mit dem die betreffende Oberfläche behandelt wird. Alternativ können die Copolymere auch in das Material eingebracht und/oder eingearbeitet werden, dessen Oberfläche vor der Adhäsion geschützt werden soll.

Bei diesen Copolymeren handelt es sich um Copolymere, die erhältlich sind durch Copolymerisation der folgenden ethylenisch ungesättigten Monomere in den angegebenen Mengen:
5-95 Gew.-% mindestens einer ethylenisch ungesättigten Verbindung umfassend eine anionische Gruppe (im Folgenden auch "Vinylmonomer (A)" oder "anionisches Vinylmonomer (A)" genannt);
0-50 Gew.-% mindestens einer ethylenisch ungesättigten Verbindung umfassend eine sekundäre oder tertiäre Aminogruppe oder eine quaternäre Ammoniumgruppe (im Folgenden auch "Vinylmonomer (B)" oder "Vinylmonomer (B) umfassend eine sekundäre oder tertiäre Aminogruppe oder eine quaternäre Ammoniumgruppe" genannt);
5-95 Gew.-% mindestens einer nichtionischen hydrophilen ethylenisch ungesättigten Verbindung (im Folgenden auch "Vinylmonomer (C)" oder "nichtionisches hydrophiles Vinylmonomer (C)" genannt);
0-15 Gew.-% mindestens einer polyfunktionalen hydrophilen ethylenisch ungesättigten Verbindung (im Folgenden auch "Vinylmonomer (F)" oder "polyfunktionales hydrophiles Vinylmonomer (F)" genannt);
0-30 Gew.-% mindestens einer hydrophoben ethylenisch ungesättigten Verbindung (im Folgenden auch "Vinylmonomer (D)" oder "hydrophobes Vinylmonomer (D)" genannt); und
0-20 Gew.-% mindestens einer ethylenisch ungesättigten Verbindung umfassend mindestens eine Silikongruppe (im Folgenden auch "Vinylmonomer (E)" oder "Vinylmonomer (E) enthaltend mindestens eine Silikongruppe" genannt);
wobei die Summe der Monomere (A), (B), (C), (D), (E) und (F) 100 Gew.-% beträgt.

In einer bevorzugten Ausführungsform sind die Mengen wie folgt gewählt:
65 - 95 Gew.-% mindestens eines anionischen Vinylmonomers (A);
0-5 Gew.-%, bevorzugt 0-2 Gew.-%, mindestens eines Vinylmonomers (B) umfassend eine sekundäre oder tertiäre Aminogruppe oder eine quaternäre Ammoniumgruppe;
5-25 Gew.-% mindestens eines nichtionischen hydrophilen Vinylmonomers (C);
0-2 Gew.-% mindestens eines polyfunktionalen Vinylmonomers (F);
0-2 Gew.-% mindestens eines hydrophoben Vinylmonomers (D); und
0-2 Gew.-% mindestens eines Vinylmonomers (E) enthaltend mindestens eine Silikongruppe;
wobei die Summe der Monomere (A) und (C) mehr als 80 Gew.%, bevorzugt mehr als 90 Gew.-%, beträgt und die Summe der Monomere (A), (B), (C), (D), (E) und (F) 100 Gew.-% beträgt, wobei in einer bevorzugten Ausführungsform die Summe der Monomere (A) und (C) mindestens 98 oder 99 Gew.-%, bevorzugt 100 Gew.%, beträgt.

In einer weiteren bevorzugten Ausführungsform sind die Mengen wie folgt gewählt:
5-30 Gew.%, bevorzugt 15-25 Gew.-%, mindestens eines anionischen Vinylmonomers (A);
0-5 Gew.-%, bevorzugt 0-2 Gew.-%, mindestens eines Vinylmonomers (B) umfassend eine sekundäre oder tertiäre Aminogruppe oder eine quaternäre Ammoniumgruppe;
70 - 95 Gew.-%, bevorzugt 75 -85 Gew.-%, mindestens eines nichtionischen hydrophilen Vinylmonomers (C);
0-2 Gew.-% mindestens eines polyfunktionalen Vinylmonomers (F);
0-2 Gew.-% mindestens eines hydrophoben Vinylmonomers (D); und
0-2 Gew.-% mindestens eines Vinylmonomers (E) enthaltend mindestens eine Silikongruppe;
wobei die Summe der Monomere (A) und (C) mehr als 80 Gew.-%, bevorzugt mehr als 90 Gew.-%, beträgt und die Summe der Monomere (A), (B), (C), (D), (E) und (F) 100 Gew.-% beträgt, wobei in einer bevorzugten Ausführungsform die Summe der Monomere (A) und (C) mindestens 98 oder 99 Gew.%, bevorzugt 100 Gew.%, beträgt.

In einer ganz besonders bevorzugten Ausführungsform handelt es sich bei dem Copolymer um ein Copolymer, das erhältlich ist durch Copolymerisation von
5-30 Gew.-%, bevorzugt 15 - 25 Gew.-%, besonders bevorzugt 18-22 Gew.-%, mindestens eines anionischen Vinylmonomers (A);
70 - 95 Gew.-%, bevorzugt 75 - 85 Gew.%, besonders bevorzugt 78 - 82 Gew.%, mindestens eines nichtionischen hydrophilen Vinylmonomers (C), wobei die Summe der Monomere (A) und (C) mindestens 99 Gew.%, vorzugsweise 100 Gew.-% beträgt.

Gegenstand der vorliegenden Erfindung ist daher ein Verfahren zur temporären oder permanenten Verminderung der Adhäsion von Mikroorganismen auf Oberflächen und/oder zur Verminderung der Ausbildung eines Biofilms auf Oberflächen, dadurch gekennzeichnet, dass ein Copolymer auf die Oberfläche aufgebracht oder in die Materialien, deren Oberflächen vor Adhäsion geschützt werden sollen, eingebracht wird.

Gegenstand der vorliegenden Erfindung ist daher auch die Verwendung eines Copolymers zur (temporären oder permanenten) Verminderung der Adhäsion von Mikroorganismen auf Oberflächen und/oder zur Verminderung der Ausbildung von Biofilmen auf Oberflächen.

Unter Verminderung der Anhaftung oder Adhäsion ist eine signifikante Reduktion der Anzahl an anhaftenden Mikroorganismen zu verstehen. Dabei wird die Anzahl der anhaftenden Mikroorganismen vorzugsweise um mehr als 20 oder 40 %, besonders bevorzugt um mehr als 50, 60, 70 oder 80 %, insbesondere um mehr als 90 oder 95 %, in Bezug zu einer unbehandelten Vergleichsprobe, vermindert. Idealerweise wird die Anhaftung vollständig oder annähernd vollständig verhindert. Die Prozentangaben beziehen sich hierbei auf den Unterschied in der Gesamtmasse der adhärierten Mikroorganismen im Vergleich zwischen unbehandelter und erfindungsgemäß behandelter Oberfläche.

### Copolymere

Im Folgenden werden die Copolymere und deren Komponenten näher beschrieben.

Die Copolymere können durch jedes beliebige dem Fachmann bekannte Polymerisationsverfahren für ethylenisch ungesättigte Monomere erhalten werden. Das Polymerisationsverfahren wird vorzugsweise in Anwesenheit von thermolabilen Initiatoren, Redoxinitiatoren oder Photoinitiatoren bei einer Temperatur von 30 °C bis 110°C durchgeführt. Als Reaktionsmedium wird vorzugsweise ein hydrophiles Lösungsmittel, z.B. Wasser oder eine Mischung aus Wasser mit einem weiteren hydrophilen Lösungsmittel, eingesetzt. Die Reaktion wird vorzugsweise unter Inertgas-Atmosphäre, insbesondere unter Einsatz von Stickstoff durchgeführt.

Das mittlere Molekulargewicht der Copolymere beträgt vorzugsweise von 10.000 bis 1.000.000 g/mol, besonders bevorzugt von 40.000 bis 300.000 g/mol. Die Copolymere sind vorzugsweise dazu in der Lage, harte Oberflächen mit einer hydrophilen, vorzugsweise negativ geladenen, Beschichtung auszustatten. Außerdem sind die Copolymere vorzugsweise dazu in der Lage, keramischen Oberflächen ein glänzendes Erscheinungsbild zu verleihen. Bevorzugte verwendete Copolymere führen bei Anwendung zu Oberflächen mit einer Oberflächenenergie von mehr als 50 mN/m, vorzugsweise von mehr als 75 mN/m, und weisen Kontaktwinkel in Bezug auf Wasser von vorzugsweise weniger als 30°, insbesondere von weniger als 10°, und Kontaktwinkel in Bezug auf Diiodmethan von vorzugsweise weniger als 40°, insbesondere weniger als 20°, auf.

Im Folgenden werden erfindungsgemäß bevorzugte Ausführungsformen der Monomere (A), (B), (C), (D), (E) und (F) erläutert.

### Monomere (A)

Die erfindungsgemäß verwendbaren anionischen Vinylmonomere (A) sind ethylenisch ungesättigte Monomere mit mindestens einer anionischen Gruppe oder mit mindestens einer Gruppe, die infolge von Salzbildung eine negative Ladung aufweist. Beispiele hierfür sind Monomere mit Carboxylgruppen und deren Salze sowie Monomere mit Sulfonsäuregruppen und deren Salze.

Falls von einem Salz der beschriebenen Monomere die Rede ist, handelt es sich vorzugsweise um ein Alkalimetallsalz oder um ein Ammoniumsalz. Hierunter sind insbesondere Natriumsalze, Kaliumsalze, Ammoniumsalze, Ethanolammoniumsalze und Triethylammoniumsalze zu verstehen. Falls Salze verwendet werden, können diese jeweils alleine oder in Kombination mit den freien Säuren verwendet werden.

Außerdem können Salze der Copolymere etwa auch durch Neutralisation der Säuregruppen tragenden Copolymere mittels Alkalihydroxid oder Ammoniak erhalten werden.

Beispiele für Monomere mit Carboxylgruppen und deren Salze sind Acrylsäure, Methacrylsäure, Maleinsäure, Fumarsäure, Natriumacrylat, Kaliumacrylat, Natriummethacrylat, Kaliummethacrylat, Natriummaleat, Kaliummaleat, Natriumfumarat, Kaliumfumarat, Ammoniumacrylat, Ammoniummethacrylat, Ammoniummaleat, Ammoniumfumarat, Acrylsäure-Monoethanolammonium-Salz, Methacrylsäure-Monoethanolammonium-Salz, Maleinsäure-Monoethanolammonium-Salz und Fumarsäure-Monoethanolammonium-Salz. Bevorzugt sind Acrylsäure, Methacrylsäure, Natriumacrylat, Natriummethacrylat, das Monoethanolammonium-Salz der Acrylsäure und das Monoethanolammonium-Salz der Methacrylsäure.

Als Monomere mit Sulfonsäuregruppe können insbesondere Monomere mit einer Struktur gemäß der allgemeinen Formeln (I) oder (II) sowie deren Alkalimetall- und Ammoniumsalze eingesetzt werden.

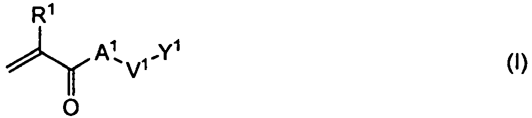

In der allgemeinen Formel (I) steht R¹ für Wasserstoff, Methyl oder Ethyl, Y¹ für eine Sulfonsäuregruppe (-SO₃H) oder Sulfonatgruppe, A¹ für O oder NH und V¹ für einen linearen oder verzweigten, gesättigten oder ungesättigten Kohlenwasserstoffrest mit 1 bis 15 C-Atomen.

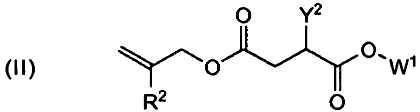

In der allgemeinen Formel (II) stehen R² für Wasserstoff, Methyl oder Ethyl, Y² für eine Sulfonsäuregruppe (-SO₃H) oder Sulfonatgruppe, W¹ für einen linearen, verzweigten oder alicyclischen, gesättigten oder ungesättigten Kohlenwasserstoffrest mit 1 bis 20 C-Atomen.

Es können jeweils einzelne der genannten Monomere oder auch Mischungen davon verwendet werden.

### Monomere (B)

Bei den Vinylmonomeren mit sekundärer oder tertiärer Aminogruppe oder quaternärer Ammoniumgruppe (B), handelt es sich in einer bevorzugten Ausführungsform um Verbindungen gemäß allgemeiner Formel (III).

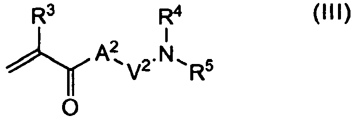

In der allgemeinen Formel (III) steht R³ für Wasserstoff, Methyl oder Ethyl, A² für O oder NH und V² für einen linearen oder verzweigten, gesättigten oder ungesättigten Kohlenwasserstoffrest mit 1 bis 15 C-Atomen. R⁴ steht für Wasserstoff, Methyl, Ethyl, Propyl oder Butyl und R⁵ steht für Methyl, Ethyl, Propyl oder Butyl.

Insbesondere können als Monomere gemäß Formel (III) 2-tert-Butylaminoethylacrylat, 2-tert-Butylaminoethylmethacrylat, Dimethylaminoethyl-acrylat, Dimethylaminoethyl-methacrylat (DMEMA), Dimethylaminopropyl-acrylat, Dimethylaminopropyl-methacrylat, Dimethylaminobutylacrylat, Dimethylaminobutyl-methacrylat, Diethylaminoethyl-acrylat, Diethylaminoethyl-methacrylat, Dimethylaminoethyl-acrylamid, Dimethylaminoethyl-methacrylamid, Dimethylaminopropylacrylamid (DMAPA), Dimethylaminopropyl-methacrylamid (DMAPMA), Dimethylaminobutylacrylamid, Dimethylaminobutyl-methacrylamid, Diethylaminoethyl-acrylamid oder Diethylaminoethyl-methacrylamid verwendet werden. Bevorzugt werden DMAPA oder DMAPMA, besonders bevorzugt DMAPMA verwendet.

Andere bevorzugte Verbindungen sind Dimethylaminoethyl-methacrylat, Dimethylaminoethylacrylat, Dimethylaminoethyl-methacrylamid und Dimethylaminoethyl-acrylamid, wobei Dimethylaminoethyl-methacrylat (DM) und Dimethylaminoethyl-methacrylamid besonders bevorzugt sind.

Vorzugsweise werden als Monomere mit quaternärer Ammoniumgruppe Verbindungen der allgemeinen Formel (IV) oder (V) eingesetzt.

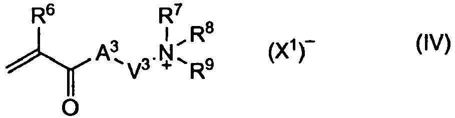

In der allgmeinen Formel (IV) steht R⁶ für Wasserstoff, Methyl oder Ethyl, A³ für O oder NH, V³ für einen linearen oder verzweigten, gesättigten oder ungesättigten Kohlenwasserstoffrest mit 1 bis 15 C-Atomen, R⁷, R⁸ und R⁹ unabhängig voneinander für Methyl oder Ethyl und X¹ für ein Gegenion.

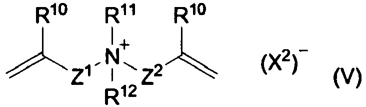

In der allgemeinen Formel (V) stehen die Reste R¹⁰ unabhängig voneinander für Wasserstoff, Methyl oder Ethyl , R¹¹ und R¹² unabhängig voneinander für Methyl oder Ethyl und X² für ein Gegenion. Z¹ und Z² stehen unabhängig voneinander für Methylen, Ethylen oder Propylen.

Bei dem Gegenion in den Formeln (IV) und (V) kann es sich beispielsweise um ein Halogenid, um Sulfat, oder um das Anion einer organischen Säure handeln, wobei Chlorid, Bromid, Sulfat und Citrat als Gegenionen besonders bevorzugt sind.

Als Beispiele erfindungsgemäß verwendbarer Verbindungen gemäß Formel (IV) seien insbesondere Acryloxyethyltrimethyl-ammoniumchlorid, Methacrytoxyethyltrimethyl-ammoniumchlorid, Acryloxypropyltrimethyl-ammoniumchlorid, Methacryloxypropyltrimethylammoniumchlorid, Acryloxybutyltrimethyl-ammoniumchlorid, Methacryloxybutyltrimethyl-ammoniumchlorid, Acryloxyethyltriethyl-ammoniumchlorid, Methacryloxyethyltriethylammoniumchlorid, Acrylamidoethyltrimethyl-ammoniumchlorid, Methacrylamidoethyltrimethylammoniumchlorid, Acrylamidopropyltrimethyl-ammoniumchlorid, Methacrylamidopropyltrimethylammoniumchlorid, Acrylamidobutyltrimethyl-arnmoniumchlorid, Methacrylamidobutyltrimethyl-ammoniumchlorid, Acrylamidoethyltriethyl-ammoniumchlorid und Methacrylamidoethyltriethyl-ammoniumchlorid genannt. Vorzugsweise werden Acryloxyethyltrimethyl-ammoniumchlorid, Methacryloxyethyltrimethyl-ammoniumchlorid, Acrylamidopropyltrimethyl-ammoniumchlorid (AAPTAC) und/oder Methacrylamidopropyltrimethyl-ammoniumchlorid (MAPTAC), besonders bevorzugt Acryloxyethyltrimethyl-ammoniumchlorid, MAPTAC und/oder AAPTAC verwendet.

Als Beispiele erfindungsgemäß verwendbarer Verbindungen gemäß Formel (V) seien Diallyldimethyl-ammoniumchlorid (DADMAC), Diallyldimethyl-ammoniumbromid, Diallyldiethylammoniumchlorid und Diallyldiethyl-ammoniumbromid. Vorzugsweise werden Diallyldimethyl-ammoniumchlorid, Diallyldimethyl-ammoniumbromid, besonders bevorzugt wird Diallyldimethyl-ammoniumbromid eingesetzt.

Erfindungsgemäß können sowohl einzelne Verbindungen aus der Gruppe der Vinylmonomere mit tertiärer Aminogruppe oder quaternärer Ammoniumgruppe als auch beliebige Kombinationen davon eingesetzt werden.

### Monomere (C)

Bei den hydrophilen Vinylmonomeren (C) handelt es sich vorzugsweise um Verbindungen der allgemeinen Formel (VI) 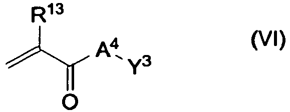 wobei R¹³ für Wasserstoff, Methyl oder Ethyl steht, A⁴ für O oder NH steht, Y³ vorzugsweise für (CH₂CH₂O)ₙ₁B¹ steht, wobei n¹ vorzugsweise für eine Zahl von 1 bis 120, insbesondere von 1 bis 60, steht und B¹ vorzugsweise für Wasserstoff oder Methyl steht. Anstelle der Polyethylenoxy-Gruppen können in den erfindungsgemäßen Vinylmonomeren auch andere Polyalkylenoxy-Gruppen, insbesondere Copolymere aus Polyethylenoxy- und Polypropylenoxy- und/oder Polybutylenoxy-Gruppen, anwesend sein.

Als Beispiele für Verbindungen der allgemeinen Formel (VI) seien Methoxypolyethyleneglycolmethacrylat (mit n¹ = 1 bis 30), und vorzugsweise Methoxypolyethyleneglycol-methacrylat (mit n¹ = 4, 7, 9, 11, 17, 22, 23 oder 45) genannt.

Das Molekulargewicht der Monomere (C) beträgt vorzugsweise bis zu 15.000 g/mol, besonders bevorzugt 300 bis 12.000 g/mol, vor allem 300 bis 2.500 g/mol.

### Monomere (D)

Hydrophobe Vinylmonomere (D) weisen hydrophobe Eigenschaften auf und besitzen vorzugsweise eine Struktur gemäß der allgemeinen Formel (VII). 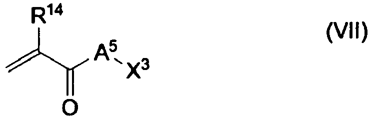 wobei R¹⁴ dieselbe Bedeutung hat wie R¹³ in der allgmeinen Formel (VI), A⁵ dieselbe Bedeutung hat wie A⁴ in der allgemeinen Formel (VI) und X³ einen linearen oder verzweigten, gesättigten oder ungesättigten Kohlenwasserstoffrest mit 1 bis 15 C-Atomen darstellt.

Als Beispiele für Verbindungen der allgemeinen Formel (VII) seien Alkyl(meth)acrylate und Alkyl(meth)acrylamide, insbesondere Methylacrylat, Methylmethacrylat (MMA), Ethylacrylat, Ethylmethacrylat, Propylacrylat, Propylmethacrylat, Butylacrylat, Butylmethacrylat, t-butyl-Acrylat, t-butyl-Methacrylat, Hexylacrylat, Hexylmethacrylat, 2-Ethylhexylacrylat, 2-Ethylhexylmethacrylat (2EHMA), Octylacrylat, Octylmethacrylat, Laurylacrylat, Laurylmethacrylat, Propylacrylamid, Propylmethacrylamid, Butylacrylamid, Butylmethacrylamid, Hexylacrylamid, Hexylmethacrylamid, Octylacrylamid, Octylmethacrylamid, Laurylacrylamid und Laurylmethacrylamid genannt. Erfindungsgemäß bevorzugt sind Propylacrylat, Propylmethacrylat, Butylacrylat, Butylmethacrylat, t-butyl-Acrylat, t-butyl-Methacrylat, Hexylacrylat, Hexylmethacrylat, 2-Ethylhexylacrylat und 2-Ethylhexylmethacrylat, besonders bevorzugt sind Butylacrylat, Butylmethacrylat, t-butyl-Acrylat und t-butyl-Methacrylat.

Es können einzelne hydrophe Vinylmonomere (D) als auch Mischungen dieser verwendet werden.

### Monomere (E)

Bei den Vinylmonomeren (E) mit mindestens einer Silikongruppe handelt es sich vorzugsweise um Monomere der allgemeinen Formel (VIII), 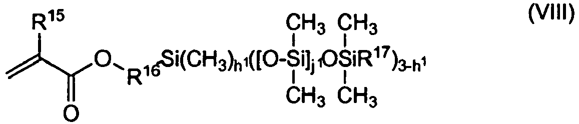 wobei R¹⁵ für Wasserstoff, Methyl oder Ethyl steht, R¹⁶ für einen linearen oder verzweigten gesättigten Kohlenwasserstoffrest mit 1 bis 6 C-Atomen, vorzugsweise für Methylen, Ethylen, Propylen oder Butylen steht, wobei in dem Kohlenwasserstoffrest eine oder mehrere CH₂-Gruppen gegebenenfalls auch durch O substituiert sein können, R¹⁷ für einen linearen oder verzweigten, gesättigten oder ungesättigten Kohlenwasserstoffrest, vorzugsweise für einen linearen, gesättigten Kohlenwasserstoffrest mit 1 bis 30, vorzugsweise 1 bis 22 C-Atomen steht, wobei der Kohlenwasserstoffrest gegebenenfalls auch ein- oder mehrfach durch Fluor substituiert sein kann, und wobei h¹ 1 oder 2 ist und j¹ einen Wert von 0 bis 500, vorzugsweise 0 bis 300, annimmt.

In einer besonders bevorzugten Ausführungsform wird als Monomer (E) PDMS1 (R¹⁵=CH₃, R¹⁶=(CH₂)₃, R¹⁷=CH₃, h¹=2, j¹=13) verwendet.

Es können sowohl einzelne Verbindungen gemäß der allgemeinen Formel (VIII) als auch Mischungen solcher Verbindungen eingesetzt werden.

Das durchschnittliche Molekulargewicht solcher Monmere, die auch als "Silikonmakromere" bezeichnet werden, beträgt vorzugsweise - gemessen durch GPC (Gelpermeationschromatographie) - 100 bis 40.000 g/mol, besonders bevorzugt 200 bis 20.000 g/mol.

### Monomere (F)

Ein erfindungsgemäß verwendbares polyfunktionelles Monomer (F) ist ein Monomer mit polymerisierbaren funktionellen Gruppen, wobei vorzugsweise solche Monomere verwendet werden, die zwei oder drei funktionelle Gruppen aufweisen. Diese Moleküle können zur Ausbildung von Verbrückungen und Verzweigungen innerhalb des Copolymers beitragen und sind dadurch insbesondere geeignet, die Dauer der Anhaftung und damit auch des gewünschten antiadhäsiven Effektes zu verlängern.

Das erfindungsgemäß verwendbare polyfunktionelle Monomer (F) enthält in einer bevorzugten Ausführungsform eine oder mehrere hydrophile Gruppen.

In der allgemeinen Formel (IX) ist ein typisches Beispiel für ein bifunktionelles Monomer dargestellt, während in der allgemeinen Formel (X) ein typisches Beispiel für ein trifunktionelles Monomer dargestellt ist.

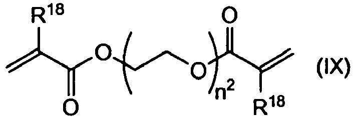

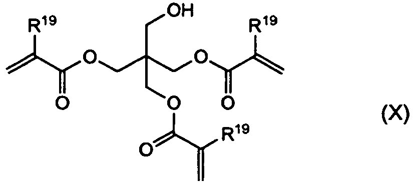

In den allgemeinen Formeln (IX) und (X) stehen die verschiedenen Reste R¹⁸ und R¹⁹ jeweils unabhängig voneinander für Wasserstoff, Methyl oder Ethyl. In Formel (IX) nimmt n² einen Wert von 1 bis 20 ein.

Bevorzugt werden als polyfunktionelles Monomer (F) Monomere gemäß Formel (IX) eingesetzt, wobei die Reste R¹⁸ unabhängig voneinander für Wasserstoff oder Methyl stehen und n² einen Wert von 1 bis 15 annimmt. In einer besonders bevorzugten Ausführungsform wird die Verbindung PEG400DA (R¹⁸=H, n²=8) eingesetzt.

Bei den polyfunktionellen Monomeren kann es sich auch um Vinylmonomere mit mindestens einer Alkoxysilangruppe handeln wie in der allgemeinen Formel (XI) dargestellt, oder um Methylolderivate wie in der allgemeinen Formel (XII) dargestellt.

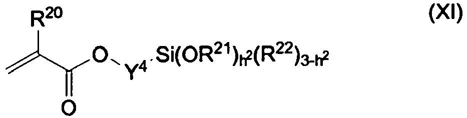

In der allgemeinen Formel (XI) steht R²⁰ für Wasserstoff oder Methyl, R²¹ und R²² stehen unabhängig voneinander für aliphatische Kohlenwasserstoffe mit vorzugsweise 1 bis 6 C-Atomen, insbesondere für Methyl oder Ethyl, Y⁴ steht für eine Alkylengruppe mit 1 bis 6 C-Atomen, insbesondere für Methylen oder Ethylen, und h² ist 1, 2 oder 3.

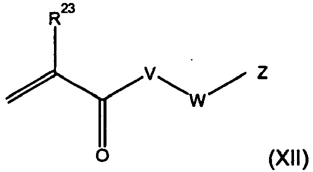

In der allgemeinen Formel (XII) steht R²³ für Wasserstoff, Methyl oder Ethyl, V für O oder NH, W für einen Kohlenwasserstoffrest mit 1 bis 15 C-Atomen, insbesondere 1 bis 6 C-Atomen,vorzugsweise für Methylen, Ethylen, Propylen oder Butylen, Z für OR²⁴, NHR²⁴, COOH, Br, Epoxyethylen oder NCO und R²⁴ für Wasserstoff oder einen Kohlenwasserstoffrest mit 1 bis 6 C-Atomen.

Es werden Copolymere beschrieben, die erhältlich sind durch Copolymerisation folgender ethylenisch ungesättigter Monomere:
65 - 95 Gew.-% mindestens eines anionischen Vinylmonomers (A), vorzugsweise von AMPS;
0-5 Gew.-%, bevorzugt 0-2 Gew.%, mindestens eines Vinylmonomers (B) umfassend eine sekundäre oder tertiäre Aminogruppe oder eine quaternäre Ammoniumgruppe;
5-25 Gew.-% mindestens eines nichtionischen hydrophilen Vinylmonomers (C), vorzugsweise eines PEG-Methylether(meth)acrylats, insbesondere von PEG-Methylethermethacrylat 2080;
0-2 Gew.-% mindestens eines polyfunktionalen Vinylmonomers (F);
0-2 Gew.-% mindestens eines hydrophoben Vinylmonomers (D); und
0-2 Gew.-% mindestens eines Vinylmonomers (E) enthaltend mindestens eine Silikongruppe;
wobei die Summe der Monomere (A) und (C) mehr als 80 Gew.%, bevorzugt mehr als 90 Gew.-%, beträgt und die Summe der Monomere (A), (B), (C), (D), (E) und (F) 100 Gew.-% beträgt, wobei in einer bevorzugten Ausführungsform die Summe der Monomere (A) und (C) mindestens 98 Gew.-%, bevorzugt 100 Gew.-%, beträgt.

Es werden ferner Copolymere beschrieben, die erhältlich sind durch Copolymerisation folgender ethylenisch ungesättigter Monomere:
5-30 Gew.%, bevorzugt 15-25 Gew.%, mindestens eines anionischen Vinylmonomers (A), vorzugsweise von AMPS;
0-5 Gew.-%, bevorzugt 0-2 Gew.-%, mindestens eines Vinylmonomers (B) umfassend eine sekundäre oder tertiäre Aminogruppe oder eine quaternäre Ammoniumgruppe;
70 - 95 Gew.-%, bevorzugt 75 - 85 Gew.%, mindestens eines nichtionischen hydrophilen Vinylmonomers (C), vorzugsweise eines PEG-Methylether(meth)acrylats, besonders bevorzugt von PEG-Methylethermethacrylat 2080;
0-2 Gew.-% mindestens eines polyfunktionalen Vinylmonomers (F);
0-2 Gew.-% mindestens eines hydrophoben Vinylmonomers (D); und
0-2 Gew.-% mindestens eines Vinylmonomers (E) enthaltend mindestens eine Silikongruppe; wobei die Summe der Monomere (A) und (C) mehr als 80 Gew.-%, bevorzugt mehr als 90 Gew.-%, beträgt und die Summe der Monomere (A), (B), (C), (D), (E) und (F) 100 Gew.-% beträgt, wobei in einer bevorzugten Ausführungsform die Summe der Monomere (A) und (C) mindestens 98 Gew.-%, bevorzugt 100 Gew.-%, beträgt.

Bevorzugt ist ein Copolymer, das erhältlich ist durch Copolymerisation folgender Monomere:
5-30 Gew.-%, bevorzugt 15-25 Gew.-%, vor allem 18-22 Gew.%, mindestens eines anionischen Vinylmonomers (A), vorzugsweise von AMPS;
70 - 95 Gew.-%, bevorzugt 75 - 85 Gew.-%, vor allem 78 - 82 Gew.-% mindestens eines nichtionischen hydrophilen Vinylmonomers (C), insbesondere eines PEG-Methylether(meth)acrylats, vorzugsweise von PEG-Methylethermethacrylat 2080,
wobei die Summe der Monomere (A) und (C) vorzugsweise mindestens 99 Gew.-%, besonders bevorzugt 100 Gew.-% beträgt.

Gemäß einer bevorzugten Ausführungsform werden die Copolymere in solchen Endkonzentrationen eingesetzt, dass keine biozide oder biostatische Wirksamkeit vorliegt. Ein besonderer Vorteil dieser Ausführungsform ist, dass das Risiko einer Resistenzbildung gering ist, da vorhandene Mikroorganismen weder abgetötet werden noch ihr Wachstum gehemmt wird, sondern der Effekt rein biorepulsiv ist. Die Konzentrationen, bei denen noch keine Hemmung des Wachstums vorliegt, sowie die minimalen Hemmkonzentrationen selbst können in dem Fachmann bekannter Weise einfach bestimmt werden. Experimentell konnte nachgewiesen werden, dass viele der Copolymere selbst bei Einsatz in relativ hohen Konzentrationen keine oder nur geringe bakterizide Wirkung zeigen. Darüber hinaus sind die meisten Copolymere auch aus toxikologischer Sicht, soweit nach heutigem Stand bekannt, unbedenklich.

Ein weiterer Vorteil der Erfindung ist es, dass einige der beschriebenen Copolymere, auch im Vergleich zu herkömmlichen Bioziden oder Biostatika, bereits in geringen Endkonzentrationen wirksam sind, so dass nur wenig Substanz verwendet werden muss.

In einer bevorzugten Ausführungsform erfolgt die Verwendung eines Copolymers als und/oder in einem Antifouling-Mittel.

Gemäß einer bevorzugten Ausführungsform wird die Anhaftung von Mikroorganismen an Filtermedien, Klebstoffen, Baustoffen und/oder Bauhilfsstoffen vermindert.

In einer weiteren bevorzugten Ausführungsform wird die Anhaftung von Mikroorganismen auf den Oberflächen, die häufig in Kontakt mit dem menschlichen Körper kommen, vermindert. Dabei sind insbesondere abiotische, technische (bzw. technisch hergestellte) Oberflächen gemeint. Im Sinne dieser besonderen Ausführungsform sind daher menschliches oder tierisches Gewebe nicht darunter zu verstehen.

Gemäß einer weiteren bevorzugten Ausführungsform wird die Anhaftung von Mikroorganismen an solchen Oberflächen wie Textilien, Keramiken, Metallen, Glas und/oder Kunststoffen vermindert. Insbesondere kann es sich hierbei um Wäsche, Sanitäreinrichtungen wie Duschen, Waschbecken oder Toiletten, Bodenbeläge, Schuhe, Leder, aus Gummi hergestellte Gebrauchsgegenstände, Fensterscheiben, Gläser, Aquarien, Geschirr, Arbeitsoberflächen, Prothesen, Zahnersatz oder Küchengeräte wie Kühlschränke oder Herde handeln. Besonders bevorzugt wird hierbei die Anhaftung und/oder die Ausbildung eines Biofilms an harten Oberflächen unterdrückt und/oder vermindert, insbesondere an den zuvor genannten harten Oberflächen, besonders bevorzugt an Keramiken, vor allem im Sanitärbereich.

Die Copolymere werden bei den genannten Anwendungen vorzugsweise auf das Material aufgebracht oder in das Material eingebracht bzw. eingearbeitet.

Die Verminderung der Anhaftung an Textilien oder Kunststoffobertflächen vermindert das Risiko einer Reinfektion der befallenen Körperbereiche. Die Verminderung der Anhaftung von Mikroorganismen an Keramiken, Kunststoffen oder Metallen, insbesondere an Prothesen oder Zahnersatz, verringert das Infektions- bzw. Reinfektionsrisiko, ohne die Haut, die Schleimhäute oder die Abwässer mit biozid oder biostatisch bzw. virostatisch wirkenden Substanzen zu belasten. Ebenso können Katheter sowie andere aus Kunststoff oder Metallen hergestellte medizinische Geräte und/oder Prothesen durch die Verwendung von Copolymeren beispielsweise in Spülungen oder Reinigungsmitteln von der Anhaftung befreit werden.

Zahnersatz, insbesondere Gebisse, können durch die Verwendung von erfindungsgemäßen Copolymeren in Mund-, Zahn- und/oder Zahnprothesenpflegeprodukten wirksam, einfach und ohne Belastung der behandelten Oberfläche mit stark biozid wirkenden, möglicherweise sogar bedingt toxischen Substanzen von der Mikroorganismenanhaftung befreit werden.

In einer bevorzugten erfindungsgemäßen Ausführungsform wird die Adhäsion von Mikroorganismen dadurch unterdrückt, dass durch Eingriff in die molekulare Kommunikation der Mikroorganismen die Ausbildung eines Biofilms gehemmt wird.

Durch die Biofilmunterdrückung lassen sich beispielsweise indirekt auch Schiffsrümpfe vor Algenbewuchs schützen. Denn der Biofilm bildet die Grundlage für die Ansiedlung von größeren Organismen wie Muscheln und Algen. Dieser Bewuchs bremst durch seinen Reibungswiderstand die Schiffe und treibt somit den Treibstoffverbrauch in die Höhe, weshalb der Belag regelmäßig aufwendig entfernt werden muss. Aus diesem Grund ist die Verwendung der Kondensationspolymere als und/oder in sogenannten Antifouling-Mitteln besonders bevorzugt.

In einer bevorzugten Ausführungsform erfolgt die erfindungsgemäße Verwendung zur Unterdrückung von Biofilmen in Sterilisations-, Desinfektions- Imprägnier- oder Konservierungsmitteln, Wasch- oder Reinigungsmitteln, oder in Kühl- oder Kühlschmiermitteln (technische Anwendungslösungen) sowie auf dem Gebiet der Wasserreinigung / Wasserbehandlung sowie der Arzneimittel,- Lebensmittel-, Brauerei-, Medizintechnik-,Farben-, Holz-, Textil-, Kosmetik-, Leder-, Tabak-, Pelz-, Seil-, Papier-, Zellstoff-, Kunststoff-, Treibstoff-, Öl-, Kautschuk- oder Maschinenindustrie.

In einer weiteren bevorzugten Ausführungsform erfolgt die erfindungsgemäße Verwendung zur Biofilmkontrolle somit bei medizinischen Geräten, Instrumenten und Apparaturen, insbesondere bei Kathetern und Endoskopen.

### Mikroorganismen

Unter Mikroorganismen sind insbesondere Bakterien, Pilze, Protozoen, Viren und Mikroalgen zu verstehen. Dies schließt bakterielle Endo- oder Exosporen sowie Sporen, die als Fortpflanzungsstrukturen bei Pilzen dienen, mit ein. In einer bevorzugten Ausführungsform sind unter Mikroorganismen Bakterien und Pilze zu verstehen. Besonders bevorzugte Pilze sind hierbei Hefen, Schimmelpilze, Dermatophyten und keratinophile Pilze.

Gemäß einer besonders bevorzugten Ausführungsform wird durch die Verwendung der Copolymere die Anhaftung von Bakterien vermindert, insbesondere die Anhaftung von gramnegativen und grampositiven Bakterien, vor allem die Anhaftung von pathogenen Bakterien ausgewählt aus Propionibacterium acnes, Stapylococcus aureus, Streptokokken Gruppe A (beta-hämolysierende S.), S. pyogenes, Corynebacterium spp. (insbesondere C. tenuis, C. diphtheriae, C. minutissimum), Micrococcus spp. (insbesondere M. sedentarius), Bacillus anthracis, Neisseria meningitidis, N. gonorrhoeae, Pseudomonas aeruginosa, P. pseudomallei, Borrelia burgdorferi, Treponema pallidum, Mycobacterium tuberculosis, Mycobacterium spp., Escherichia coli sowie Streptococcus spec. (insbesondere S. gordonii, S. mutans), Actinomyces spec. (insbesondere A. naeslundii), Salmonella spec., Actinobacteria (insbesondere Brachybacterium spec.), alpha-Proteobacteria (insbesondere Agrobacterium spec.), beta-Proteobacteria (insbesondere Nitrosomonas spec.), Aquabacterium spec., Hydrogenophaga, gamma-Proteobacteria, Stenotrophomonas spec., Xanthomonas spec. (campestris), Neisseria spec., Haemophilus spec. sowie alle Mikroorganismen, die von Paster et al. (J. Bac. 183 (2001) 12, 3770-3783) beschrieben werden.

Nach einer weiteren bevorzugten Ausführungsform wird durch die Verwendung der Copolymere die Anhaftung von humanpathogenen Pilzen vermindert. Dazu sind zum Beispiel die humanpathogenen Spezies der Pilze aus den Klassen Ascomycota, Basidomycota, Deuteromycota und Zygomycota zu zählen, insbesondere alle Spezies der Gattungen Aspergillus, Penicillium, Cladosporium und Mucor sowie Stachybotrys, Phoma, Alternaria, Aureobasidium, Ulocladium, Epicoccum, Stemphyllium, Paecilomyces, Trichoderma, Scopulariopsis, Wallemia, Botrytis, Verticillium und Chaetonium sowie die humanpathogenen Formen von Candida.

Nach einer weiteren bevorzugten Ausführungsform wird die Anhaftung von Pilzen der Spezies Rhodotorula spp., Cryptococcus spp., Exophilia spp. , Hormoconis spp. vermindert.

Besonders bevorzugt wird erfindungsgemäß die Anhaftung der medizinisch relevanten Formen von Candida vermindert, beispielsweise von C. albicans, C. boidinii, C. catenulata, C. ciferii, C. dubliniensis, C. glabrata, C. guilliermondii, C. haemulonii, C. kefyr, C. krusei, C. lipolytica, C. lusitaniae, C. norvegensis, C. parapsilosis, C. pulcherrima, C. rugosa, C. tropicalis, C. utilis, C. viswanathii. Insbesondere bevorzugt sind C. albicans, C. stellatoidea, C. tropicalis, C. glabrata und C. parapsilosis. Die Mycel-Form von Candida wird als humanpathogene Form des Pilzes betrachtet. Eine Verminderung der Anhaftung von Candida beispielsweise an Textilien oder Kunststoffen vermindert das Risiko der Reinfektion, ohne die Bildung von Resistenzen zu erhöhen.

Die Copolymere sind besonders bevorzugt zur Verminderung der Anhaftung aller Spezies der Gattung Aspergillus an Oberflächen geeignet, ganz besonders bevorzugt der Spezies, die ausgewählt sind aus Aspergillus aculeatus, A. albus, A. alliaceus, A. asperescens, A. awamori, A. candidus, A. carbonarius, A. carneus, A. chevalieri, A. chevalieri var. intermedius, A. clavatus, A. ficuum, A. flavipes, A. flavus, A. foetidus, A. fumigatus, A. giganteus, A. humicola, A. intermedius, A. japonicus, A. nidulans, A. niger, A. niveus, A. ochraceus, A. oryzae, A. ostianus, A. parasiticus, A. parasiticus var. globosus, A. penicillioides, A. phoenicis, A. rugulosus, A. sclerotiorum, A. sojae var. gymnosardae, A. sydowi, A. tamarii, A. terreus, A. terricola, A. toxicarius, A. unguis, A. ustus, A. versicolor, A. vitricolae und A. wentii. Besonders bevorzugt wird die Anhaftung von Aspergillus flavus und Aspergillus nidulans vermindert bzw. im Wesentlichen ganz verhindert.

Gemäß einer weiteren Ausführungsform wird die Anhaftung von keratinophilen Pilzen ausgewählt aus Trichophyton mentagrophytes, T. rubrum, T. asteroides, T. concentrium, T. equinum, T. meginii, T. gallinae, T. tonsurans, T. schoenleinii, T. terrestre, T. verrucosum, T. violaceum, Microsporum canis, Microsporum audounii, M. gypseum, Epidermophyton flossocum, Malassezia furfur, M. sympodialis, M. globosa und M. pachydermatis vermindert.

Gemäß einer weiteren Ausführungsform wird durch die Verwendung der Copolymere die Anhaftung von Algen, von human-, tier- und/oder pflanzenpathogenen Viren sowie von Bakteriophagen vermindert, wobei vor allem die Verminderung der Anhaftung von Grün- und Blaualgen an Fassaden und Baustoffen relevant ist. Die relevanten Vertreter der Blaualgen (Cyanobacteria) sind aus den Gattungen Anabaena, Anacystis, z.B. Anacystis montana, Gloeocapsa, Lyngbia, Nostoc, Oscillatoria, z.B. Oscillatoria lutea, Phormidium, Schiszothrix und Scytonema. Gattungen der Grünalgen (Chlorophyta) sind beispielsweise Chlorella, Choricystis, Chlamydomonas, Chlorococcum, Stichcoccus, insb. Stichcoccus bacillaris, Ulothrix und Trentepholia, insb. Trentepholia odorata.

Mikroorganismen, die hinsichtlich der Biofilmbildung besonders relevant sind, und deren Anhaftung besonders bevorzugt vermindert wird, sind beispielsweise Aeromonaden, insbesondere *Aeromonas hydrophila* oder *Aeromonas salmonicida,* Agrobacterium, insbesondere *Agrobacterium tumefaciens,* Aquabakterium, *Bradyrhizobium japonicum, Burkholderia cepacia, Chromobacterium violaceum,* Dermacoccen, insbesondere *Dermacoccus nishinomiyaensis, Enterobacter agglomerans, Erwinia carotovora, Erwinia chrysanthemi, Escherichia coli, Nitrosomona europaea, Obesumbacterium proteus, Pantoea stewartii,* Pseudomonaden, insbesondere *Pseudomonas aeruginosa, Pseudomonas aureofaciens, Pseudomonas fluorescens* oder *Pseudomonas syringae, Ralstonia solanacearum,* Rhizobium, insbesondere *Rhizobium etli* oder *Rhizobium leguminosarum, Rhodobacter sphaeroides, Salmonella enterica,* Serratia, insbesondere *Serratia liquefaciens, Vibrio anguillarum, Vibrio fischeri,* Xanthomonas, insbesondere *Xanthomonas campestris, Xenorhabdus nematophilus,* Yersinia, insbesondere *Yersinia enterolytica, Yersinia pestis, Yersinia pseudotuberculosis* oder *Yersinia ruckeri.*

Relevante Biofilmbildner im marinen Bereich, die das sogenannte Fouling auf submersen Oberflächen mitverursachen können, und deren Anhaftung und Biofilmbildung ebenfalls besonders bevorzugt vermindert wird, sind insbesondere ausgewählt aus *Zooshikella gangwhensis, Pseudomonas fluorescens, Cythophaga sp. KT0803, Psychrobakter glacinola, Pseudoalteromonas carragenovora, Shewanella baltica* und *Bacillus subtilis.*

### Wasch- und Reinigungsmittel

Die Verwendung der Copolymere erfolgt vorzugsweise in Wasch- und/oder Reinigungsmitteln.

Die Copolymere enthaltenden Wasch- und/oder Reinigungsmittel werden im Folgenden näher erläutert.

Die Wasch- und Reinigungsmittel können ohne Belastung der Abwässer relativ geringe Mengen an erfindungsgemäßen Copolymeren enthalten. Da sie beim Einsatz zur Reinigung von Textilien in konzentrierter Form eingesetzt und auf die entsprechend wirksamen Konzentrationen in der Waschlauge verdünnt werden, müssen die Wirkstoffe in diesem Fall in entsprechend höherer Konzentration eingesetzt werden. Üblich sind Verdünnungen der Wasch- und Reinigungsmittel mit Wasser zwischen 1:40 und 1:200.

Das Copolymer wird erfindungsgemäß bevorzugt zu Reinigungsmitteln, die zum Säubern harter Oberflächen, wie zum Beispiel von Böden, Kacheln, Fliesen, Kunststoffen sowie anderen harten Oberflächen im Haushalt, in Toiletten, in öffentlichen sanitären Anlagen, in Schwimmbädern, Saunen, Sportanlagen oder in Arzt- oder Massagepraxen zugegeben werden.

Unter Wasch- und Reinigungsmitteln werden im erfindungsgemäßen Zusammenhang im weitesten Sinn tensidhaltige Zubereitungen in fester Form (Partikel, Pulver usw.), halbfester Form (Pasten usw.), flüssiger Form (Lösungen, Emulsionen, Suspensionen, Gele usw.) und gasähnlicher Form (Aerosole usw.) verstanden, die im Hinblick auf eine vorteilhafte Wirkung bei der Anwendung jede beliebige Art von Tensiden enthalten können, üblicherweise neben weiteren Komponenten, die für den jeweiligen Anwendungszweck üblich sind. Beispiele für solche tensidhaltige Zubereitungen sind tensidhaltige Waschmittelzubereitungen, tensidhaltige Reinigungsmittel für harte Oberflächen, oder tensidhaltige Aviviermittelzubereitungen, die jeweils fest oder flüssig sein können, jedoch auch in einer Form vorliegen können, die feste und flüssige Komponenten oder Teilmengen der Komponenten nebeneinander umfasst.

Die Wasch- und Reinigungsmittel können üblicherweise enthaltene Inhaltsstoffe enthalten, wie anionische, nichtionische, kationische und amphotere Tenside, anorganische und organische Buildersubstanzen, spezielle Polymere (beispielsweise solche mit Cobuildereigenschaften), Schauminhibitoren, Farbstoffe und ggf. zusätzliche Duftstoffe (Parfums), pH-Stellmittel, Verdicker, Polyethylenglykole, Bleichmittel (wie beispielsweise Peroxo-Bleichmittel und Chlor-Bleichmittel), Bleichaktivatoren, Bleichstabilisatoren, Bleichkatalysatoren, Enzyme, insbesondere Proteasen, Amylasen oder Cellulasen, Enzymstabilisatoren, Farbübertragungsinhibitoren und Vergrauungsinhibitoren, ohne dass die Inhaltsstoffe auf diese Substanzgruppen beschränkt sind. Häufig sind wichtige Inhaltsstoffe dieser Zubereitungen auch Waschhilfsmittel, für die beispielhaft und nicht beschränkend optische Aufheller, UV-Schutzsubstanzen sowie Soil Repellents, insbesondere Polymere, die einer Wiederanschmutzung von Fasern entgegenwirken, verstanden werden. Für den Fall, dass die Zubereitungen zumindest zum Teil als Formkörper vorliegen, können auch Binde- und Desintegrationshilfsmittel enthalten sein. Hinsichtlich der einzelnen Substanzgruppen wird insbesondere auf den Offenbarungsgehalt der Anmeldung

Die Copolymere werden in erfindungsgemäßen Mitteln, insbesondere in Wasch- und/oder Reinigungsmitteln, vorzugsweise in einer Menge von 0,01 - 10 Gew.-%, besonders bevorzugt in einer Menge von 0,05 bis 2 Gew.-%, insbesondere in einer Menge von 0,1 bis 1 Gew.%, eingesetzt.

Wasch- und/oder Reinigungsmittel können einen sauren, neutralen oder basischen pH-Wert besitzen. In einer bevorzugten erfindungsgemäßen Ausführungsform haben die Wasch- und/oder Reinigungsmittel einen pH von 0 bis 14, besonders bevorzugt von 0 bis 7, insbesondere von 1 bis 4.

In einer besonders bevorzugten Ausführungsform enthält ein
Wasch- und/oder Reinigungsmittel, insbesondere ein Reiniger für harte Oberflächen,
0,1 bis 10 Gew.-%, vorzugsweise 0,5 bis 5 Gew.-%, insbesondere 1 bis 3 Gew.-%, mindestens eines erfindungsgemäßen Copolymers,
0,01 bis 10 Gew.-%, vorzugsweise 0,1 bis 5 Gew.-%, mindestens eines Polyethylenglycols mit einem durchschnittlichen mittleren Molekulargewicht von 200 bis 600.000 g/mol, vorzugsweise 10.000 bis 200.000 g/mol,
0,01 bis 10 Gew.-%, vorzugsweise 0,1 bis 3 Gew.-%, mindestens eines Tensids, vorzugsweise mindestens eines anionischen oder nichtionischen Tensids,
0 bis 10 Gew.-%, vorzugsweise 0,01 bis 10 Gew.-%, mindestens eines Verdickers,
0,01 bis 80 Gew.-%, vorzugsweise 0,1 bis 5 Gew.-%, mindestens eines organischen Lösungsmittels,
0,01 bis 10 Gew.%, vorzugsweise 0,1 bis 3 Gew.-%, mindestens eines komplexierenden Agens und/oder Gerüststoffs,
0,01 bis 10 Gew.%, vorzugsweise 0,2 bis 5 Gew.%, mindestens einer anorganischen oder organischen Säure,
0,001 bis 10 Gew.-%, vorzugsweise 0,01 bis 1 Gew.-%, mindestens eines Duftstoffs und
0,001 bis 10 Gew.-%, vorzugsweise 0,02 bis 1 Gew.-%, mindestens eines Farbstoffs.

In einer weiteren besonders bevorzugten Ausführungsform ist ein Wasch-und/oder Reinigungsmittel, insbesondere ein Reiniger für harte Oberflächen, dadurch gekennzeichnet,
dass die Tenside ausgewählt sind aus der Gruppe bestehend aus Alkylpolyglycoside, insbesondere C₈₋₁₀-Alkyl-1,5-glucosid, Natriumlaurylethersulfat und Natriumlaurylsulfat;
dass das organische Lösungsmittel ausgewählt ist aus der Gruppe bestehend aus Alkanol, insbesondere Ethanol, Propylenglycole, Glycolether und Benzol;
dass die Gerüststoffe ausgewählt sind aus der Gruppe bestehend aus Natriumcitrat, Natriumcarbonat und Phosphonaten;
dass die Verdicker ausgewählt sind aus der Gruppe bestehend aus Polysacchariden, substitutierter Cellulose, insbesondere Hydroxypropylmethylcellulose, Poly(meth)acrylaten, Guar-Gum und Xanthan-Derivativen wie Xanthan-Gum;
und dass die Säure ausgewählt ist aus der Gruppe bestehend aus Citronensäure, Ameisensäure, Milchsäure und Amidosulfonsäure.

In einer weiteren besonders bevorzugten Ausführungsform hat ein Wasch-und/oder Reinigungsmittel, insbesondere ein Reiniger für harte Oberflächen, einen pH-Wert von 0 bis 10, vorzugsweise von 1 bis 4.

### Pharmazeutische und kosmetische Zusammensetzungen

Die pharmazeutischen Zusammensetzungen können hierbei sowohl zur Behandlung von Krankheiten als auch prophylaktisch eingesetzt werden.

Zur Herstellung pharmazeutischer Zubereitungen lassen sich die Wirkstoffe, gegebenenfalls in Kombination mit anderen Wirksubstanzen, zusammen mit einem oder mehreren inerten üblichen Trägerstoffen und/oder Verdünnungsmitteln, z. B. mit Gelatine, Gummi arabicum, Maisstärke, Milchzucker, Rohrzucker, Sorbitol, mikrokristalliner Cellulose, Magnesiumstearat, Polyvinylpyrrolidon, Zitronensäure, Weinsäure, Wasser, Benzylalkohol, Polyalkylenglycol, Wasser/Ethanol, Wasser/Glycerin, Wasser/Sorbit, Wasser/Polyethylenglykol, Propylenglykol, Titandioxid, einem Cellulosederivat wie z.B. Carboxymethylcellulose oder fetthaltigen Substanzen wie Hartfett, Talkum oder pflanzliche Öle oder deren geeigneten Gemischen, in übliche galenische Zubereitungen wie Tabletten, Dragees, Kapseln, Pulver, Suspensionen, Tropfen, Ampullen, Säfte oder Zäpfchen einarbeiten. Gegebenenfalls können darüber hinaus Konservierungs-, Stabilisierungs-, Netzmittel, Emulgatoren oder Salze zur Veränderung des osmotischen Druckes oder Puffer enthalten sein. Als Träger können auch grenzflächenaktive Hilfsstoffe wie Salze der Gallensäuren oder tierische oder pflanzliche Phospholipide, aber auch Mischungen davon sowie Liposome oder deren Bestandteile verwendet werden.

Die pharmazeutischen und kosmetischen Zubereitungen können neben den erfindungsgemäßen Wirkstoffen auch weitere Wirkstoffe enthalten, die die Adhäsion von Mikroorganismen verhindern. Ferner kann der Einsatz der erfindungsgemäßen Wirkstoffe gegebenenfalls auch in Kombination mit antimikrobiellen, insbesondere antibakteriellen, antimykotischen und/oder antiseptischen Wirkstoffen und/oder in Kombination mit adstringierenden Stoffen erfolgen, wobei die antimikrobiellen Wirkstoffe dann vorzugsweise in geringen Konzentrationen eingesetzt werden.

In einer besonders bevorzugten Ausführungsform handelt es sich bei den pharmazeutischen oder kosmetischen Zubereitungen um solche zur topischen Applikation auf die Haut und deren Anhangsgebilde und/oder zur Applikation auf die Schleimhaut, insbesondere im oralen oder genitalen Bereich, bzw. zur intertriginösen Applikation. Im Folgenden werden diese Zubereitungen als "Hautbehandlungsmittel" bezeichnet.

Bei der kosmetischen oder pharmazeutischen Zubereitung, und insbesondere bei dem Hautbehandlungsmittel, kann es sich hierbei insbesondere um eine Lotion, eine Creme, eine Emulsion, eine Salbe, eine Paste, ein Öl, eine Wachs/Fett-Masse, ein Gel, ein Puder, ein Spray bzw. Aerosol, eine Lösung, insbesondere wässrige oder alkoholische Lösung, bzw. Tinktur, um einen feuchten Verband, einen Okklusionsverband, ein Pflaster, ein Stiftpräparat, ein Haarbehandlungs-, Haarwasch- oder Haarpflegemittel, insbesondere ein Haarshampoo, eine Haarlotion, eine Haarkur oder ein Haarwasser, ein Körperpflegemittel, ein Schaumbad, ein Duschbad oder ein Fußbad handeln.

Der physiologische Träger der Hautbehandlungsmittel umfasst vorzugsweise ein oder, in beliebiger Kombination, mehrere Hilfs- oder Zusatzstoffe, wie sie üblicherweise in solchen Zubereitungen verwendet werden, wie z.B. Fette, Öle, Überfettungsmittel, Wachse, Silikone, Emulgatoren, Dispergiermittel, Perlglanzwachse, Alkohole, Polyole, Konsistenzgeber, Stabilisatoren, Verdickungsmittel, Filmbildner, Quellmittel, Hydrotrope bzw. anfeuchtende und/oder feuchthaltende Substanzen, Polymere, Tenside, Weichmacher, Schaumbremsen, Alkalinisierungs- oder Acidifizierungsmittel, Enthärter, Adsorbentien, Lichtschutzmittel, Elektrolyte, Sequestrierungsmittel, Solubilisatoren, organische Lösungsmittel, Konservierungsmittel, keimhemmende Wirkstoffe, insbesondere Fungizide oder Bakterizide, Antioxidantien, biogene Wirkstoffe, Vitamine, Proteinhydrolysate, Mono-, Oligo- und Polysaccharide, Enzyminhibitoren, insbesondere MMP1-inhibierende Substanzen, Desodorantien bzw. Geruchsabsorber, Antitranspirantien, Antischuppenmittel, Insektenrepellentien, Selbstbräuner, α-Hydroxy- und α-Ketocarbonsäuren, Duftstoffe, Farbstoffe und/oder Pigmente.

Die Hautbehandlungsmittel liegen bei topischer Verabreichung vorteilhafterweise in Form einer flüssigen oder festen Öl-in-Wasser-Emulsion, Wasser-in-Öl-Emulsion, Mehrfach-Emulsion, Mikroemulsion, PIT-Emulsion oder Pickering-Emulsion, in Form eines Hydrogels, eines alkhoholischen Gels, eines Lipogels, in Form einer ein- oder mehrphasigen Lösung, eines Schaumes, einer Salbe, eines Pflasters, einer Suspension, eines Puders oder einer Mischung mit mindestens einem als medizinischen Klebstoff geeigneten Polymer vor. Die Hautbehandlungsmittel können auch in wasserfreier Form, wie beispielsweise einem Öl oder einem Balsam, dargereicht werden. Hierbei kann der Träger ein pflanzliches oder tierisches Öl, ein Mineralöl, ein synthetisches Öl oder eine Mischung solcher Öle sein.

In einer weiteren besonders bevorzugten Ausführungsform handelt es sich bei den kosmetischen und/oder pharmazeutischen Zubereitungen um solche zur oralen Applikation, wobei der Zielort der Applikation der Mund selbst ist. In einer bevorzugten Ausführungsform wird hierbei eines der zuvor beschriebenen Hautbehandlungsmittel verwendet, wobei die Zusammensetzung so gewählt wird, dass es sich bei dem Präparat um eine Mundcreme, eine Salbe, eine Tinktur oder um eine Suspension handelt. Der Begriff "pharmazeutische Zubereitungen zur oralen Applikation" umfasst hierbei neben Mund- und Zahnpflegemittel auch Prothesenreinigungsmittel, insbesondere Gebissreinigungstabletten.

Die Mund-, Zahn- und/oder Zahnprothesenpflegemittel können beispielsweise als Mundwasser, Gel, flüssige Zahnputzlotion, steife Zahnpaste, Gebissreiniger oder Prothesenhaftcreme vorliegen. Hierzu ist es erforderlich, die verwendeten Stoffe in einen geeigneten Träger einzubringen.

Die erfindungsgemäßen Zahnpasten und Zahngele können als Inhaltsstoffe neben den Wirkstoffen insbesondere Tenside, Putzkörper, Aromen, Süßungsmittel sowie weitere dem Fachmann bekannte Wirkstoffe enthalten. Als Träger dienen vorzugsweise Wasser und Bindemittel. Ferner können etwa auch Feuchthaltemittel, Konservierungsstoffe, Konsistenzgeber und/oder Farbpigmente enthalten sein.

Bei den zuvor genannten weiteren Wirkstoffen, die in den Mundbehandlungsmitteln enthalten sein können, kann es sich beispielsweise um eine Fluor-Verbindung, um einen Wirkstoff gegen Plaque-Bakterien, um einen Wirkstoff gegen Zahnsteinbildung, zur Reminalisierung, gegen sensible Zähne oder zum Schutz des Zahnfleischs handeln. Des Weiteren kann es sich bei dem weiteren Wirkstoff um einen weiteren Wirkstoff zur Pilzbehandlung, insbesondere Candidosen-Behandlung, handeln.

Weitere übliche Zusätze für die Mund-, Zahn- und/oder Zahnprothesenpflege mittel sind z.B.
- pH-Stellmittel und Puffersubstanzen wie z.B. Natriumbicarbonat, Natriumcitrat, Natriumbenzoat, Zitronensäure, Phosphorsäure oder saure Salze, z.B. NaH₂PO₄
- wundheilende und entzündungshemmende Stoffe wie z.B. Allantoin, Harnstoff, Panthenol, Azulen bzw. Kamillenextrakt
- weitere gegen Zahnstein wirksame Stoffe wie z.B. Organophosphonate, z.B. Hydroxyethandiphosphonate oder Azacycloheptandiphosphonat
- Konservierungsstoffe wie z.B. Sorbinsäure-Salze, Natriumbenzoat, Chlorhexidindigluconat, p-Hydroxybenzoesäure oder deren Ester.
- Plaque-Inhibitoren wie z.B. Hexachlorophen, Chlorhexidin, Hexetidin, Triclosan, Bromchlorophen, Phenylsalicylsäureester.

### Ausführungsbeispiele

### Beispiel 1: Synthese der Copolymere

### PEG-MA 2080 : AMPS = 80 :20 (Verbindung 9007-009) (Anteile in Gew.-%)

2,00 g 2-Acrylamido-2-methylpropanesulfonsäure und 16 g Polyethylenglycol-methacrylat 2080 (50% Lsg in Wasser) wurden in einen 250 ml-Kolben eingewogen und in 62 g entionisiertem Wasser gelöst. Die Reaktionsmischung wurde entgast und die folgende Reaktion unter Stickstoffzufuhr durchgeführt. Anschließend wurde der Inhalt des Kolbens auf 65°C erhitzt. Danach wurde eine Lösung von 0,2 g 2,2',-azobis(2-amidinopropan)-dihydrochlorid (V50) in 0,8 g Wasser hinzugegeben. Die so entstandene Mischung wurde für eine Stunde bei 75°C gerührt und anschließend eine weitere Stunde bei 80 °C. Auf diese Weise wurde eine viskose Polymerlösung erhalten. Das so erhaltene Reaktionsprodukt kann anschließend zur Entfernung von Resten an Monomeren der Dialyse unterzogen werden. Alternativ kann während der Reaktion ein Nachinitiierungsschritt durchgeführt werden.

Für den Fall, dass hydrophobere Monomere verwendet werden, kann eine Verwendung von Tensiden und Dispergierhilfsmitteln hilfreich sein. Ebenso kann der pH-Wert der Reaktion schon vor der Polymerisation eingestellt werden oder aber nach der Reaktion vor Durchführung von Anwendungstests. Es können auch andere wasserlösliche Initiatoren verwendet werden, die thermolabil sind, alternativ können auch Redoxpaare oder Photoinitiatoren verwendet werden.

Auf ähnliche Weise wurden folgende weitere Polymere erhalten (Anteile jeweils in Gew.-%): Mischungen aus
MAPTAC : AMPS : PEG-MA 2080 : MAA : Geniosil XL 34 = 2 : 76,3 : 12,1 : 8,0 : 1,6 (Verbindung 9007-012)
PEG-MA 475 : AMPS = 6,4 : 93,6 (Verbindung 8406-108)
PEG-MA 2080 : AMPS : DMAPMA: PEG-dimethacrylat M330 = 23,5 : 74,6 : 1,5: 0,4 (Verbindung 8389-115)
PEG-MA 2080 : AMPS : MAPTAC : MA = 11,3 : 71,7 : 1,9 : 15,1 (Verbindung 9007-001) PEG-MA 2080 : AMPS : MAPTAC : MA = 12 : 76 : 4 : 8 (Verbindung 8389-094)
PEG-MA 2080 : AMPS : MAPTAC : PEG-dimethacrylat M330 = 13,2: 83,7 : 2,2 : 0,9 (Verbindung 8389-036)
PEG-MA 2080 : AMPS : MAPTAC : MA = 21,8 : 69,1 : 1,8 : 7,3 (Verbindung 8389-181)
PEG-MA 2080 : AMPS : MAPTAC : MA = 12,2 : 77,6 : 2 : 8,2 (Verbindung 8844-046)
PEG-MA 1100 : AMPS : MAPTAC : MA = 21,8 : 69,1 : 1,8 : 7,3 (Verbindung 8844-048)
PEG-MA 2080 : AMPS = 10 : 90 (Verbindung 8844-004)
PEG-MA 2080 : AMPS, Natriumsalz : MAPTAC : MA = 8,9 : 71,3 : 1,8 : 18 (Verbindung 8406-102)

Im Folgenden sind die verwendeten Monomere dargestellt:
Monomere (A) 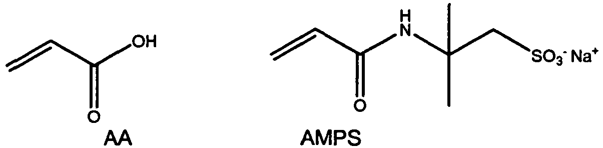
Monomere (B) 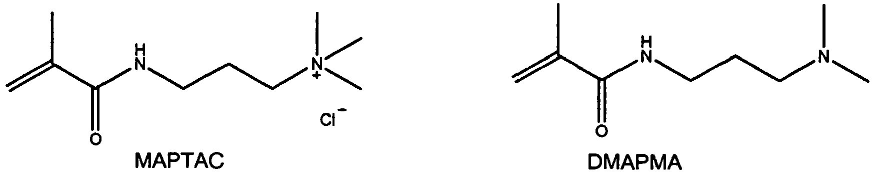
Monomere (C) 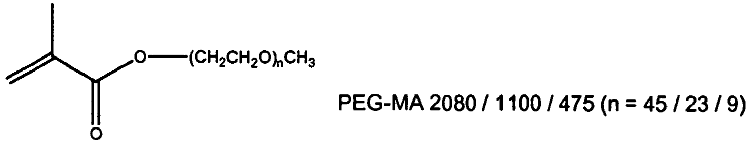 Monomere (F) 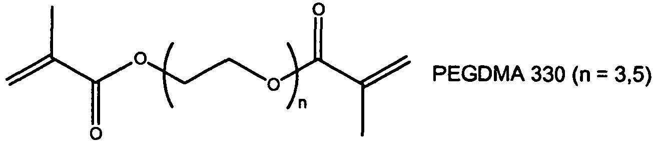
Geniosil XL 34

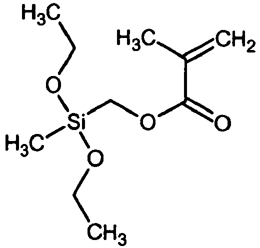

### Beispiel 2: Polymer-Screening im Adhäsionsversuch

Zum Vergleich der biorepulsiven Leistung von Polymerfilmen auf harten Oberflächen, die Relevanz im Haushalt haben wie z. B. Keramik, Kunststoff, Edelstahl und Glas, wurden die Polymere zunächst in einem Screening-Ansatz untersucht. Es wurden dazu Adhäsionstests für Mikroorganismen (hier: *Staphylococcus aureus* DSM799 und *Pseudomonas aeruginosa* DSM939) durchgeführt. Hierzu wurden Prüfkörper (Glas, Kunststoff, Keramik, Edelstahl) vom Format 18x18 bis 20x20 mm zunächst mit 70 %igem Methylalkohol für 10 Minuten desinfiziert und danach mit sterilem und destilliertem Wasser gewaschen und getrocknet. Die so vorbereiteten Prüfmuster wurden mit einer Keimsuspension, die zusätzlich eine entsprechende Polymerkonzentration enthielt, überschichtet und für 1 Stunde inkubiert. Anschließend wurden die Keimsuspensionen abgesaugt und die Prüfkörper 2 mal gewaschen. Nach Überführen in sterile Prüfplatten wurden die Prüfkörper für S. *aureus* mit Nähragar überschichtet und anschließend für 48 Stunden bei 30 °C inkubiert. Für P. *aeruginosa* wurden die Prüfkörper in Puffer geschüttelt, anschließend mit Nähragar plus 10 % TZC überschichtet und anschließend für 24 Stunden bei 30 °C inkubiert. Die Schüttelflüssigkeit wurde über eine Membran filtriert und die Filter auf Caso-Agar für 24 Stunden bei 30 °C inkubiert. Das Ausmaß von Keimwachstum, das auf die Besiedelung der Prüfkörper mit Keimen zurück schließen lässt, wird relativ zu einem Ansatz ohne Polymer jedoch mit entsprechenden Lösungsmittelanteil in % angegeben. Dabei wird die Keimbelastung des Kontroll- Prüfkörpers als 100 % gesetzt. Tabelle 1 zeigt die bestwirkenden Polymere im Screening-Adhäsionstest, wobei ein wirksamer Effekt immer als eine mindestens 50%ige Keimverminderung im Vergleich zur Kontrolle definiert wird. Die besten Polymere haben eine breite biorepulsive Wirkung gegenüber beiden Prüfkeimen bei möglichst allen Oberflächen und wirken optimal schon bei Konzentrationen unter 1%.

In diesem Test zeigten alle Polymere aus Beispiel 1 eine gute Wirkung, wobei sehr gute Ergebnisse hinsichtlich der getesteten Mikroorganismen auf folgenden Oberflächen erhalten wurden (G, T, K und S stehen hierbei für Glas (G), Kunststoff (T), Keramik (K) und Edelstahl (S)):
- 9007-012: P. aeruginosa (G, T, K, S); S. aureus (G, T, K, S)
- 8406-108: P. aeruginosa (G, T, K, S); S. aureus (G, T)
- 8389-115: P. aeruginosa (G, T, K, S); S. aureus (G, K)
- 9007-001: P. aeruginosa (G, T, K, S); S. aureus (T)
- 8389-094: P. aeruginosa (G, T, K, S); S. aureus (T)
- 8389-036: P. aeruginosa (G, T, K, S)
- 8389-181: P. aeruginosa (G, T, K, S)
- 8844-046: P. aeruginosa (G, T)
- 8844-048: P. aeruginosa (G, T)
- 8844-004: :P. aeruginosa (T, K)
- 9007-009: P. aeruginosa (T, K)
- 8406-102: P. aeruginosa (T, K)
Alle Polymere wurden hierbei in einer Menge von 1 Gew.% eingesetzt.

### Beispiel 3: Polymer-beschichtete Oberflächen im Adhäsionsversuch

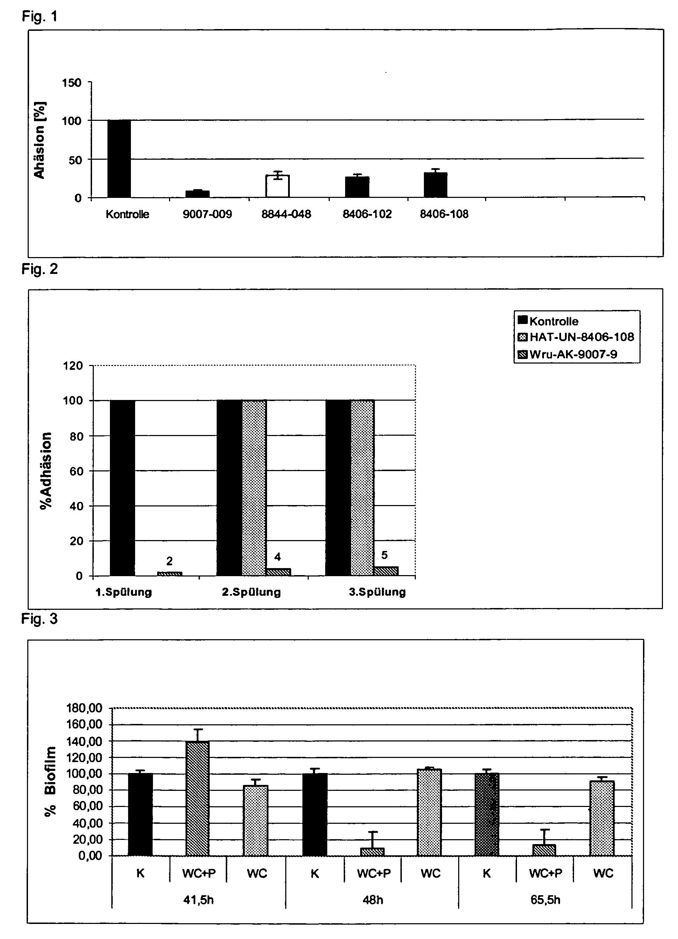

Um Wechselwirkungen der gelösten Polymere mit den Prüfkeimen im Versuchsansatz auszuschließen, wurde die Wirkung ausgewählter Polymere direkt auf der Oberfläche getestet. Die Polymere wurden folgendermaßen immobilisiert: 1%ige Polymerlösung in Ethanol, 40µl dieser Polymer-Lösung wurden auf Oberflächen (Kunststoff und Keramik) aufgetragen und 24 Stunden bei Raumtemperatur getrocknet (Kontrolle: nur Ethanol). Die so vorbereiteten Prüfmuster wurden mit einer Keimsuspension von *S*. *aureus* überschichtet und für 1 Stunde inkubiert. Das Ausmaß von Keimwachstum, das auf die Besiedelung der Prüfkörper mit Keimen zurück schließen lässt, wird relativ zu einem mit der Vergleichszusammensetzung beschichteten Prüfkörper in % angegeben. Dabei wird die Keimbelastung des mit der Vergleichszusammensetzung beschichteten Prüfkörpers als 100 % gesetzt. Es zeigte sich, dass die meisten immobilisierten Polymere die gleiche Wirkung zeigten wie in gelöster Form. In Fig. 1 sind beispielhaft die Ergebnisse für die Polymere 9007-009, 8844-048, 8406-102 und 8406-108 dargestellt. Es ist zu erkennen, dass die Polymere eine deutliche Adhäsionsreduktion bewirken.

### Beispiel 4: Polymer-beschichtete WC-Keramiken im anwendungsnaher Labortest

Die Polymere, die im vereinfachten Testverfahren eine deutliche Keimreduktion (insbesondere auf Keramik) gezeigt haben, wurden anschließend in einem anwendungsnahen Testsystem untersucht, welches vom Aufbau die Funktion einer Toilette simuliert. Zum Vergleich der biorepulsiven Leistung von Polymerfilmen auf WC-Keramiken ist es erforderlich, einheitliche Testbedingungen festzulegen. Zu diesem Zweck wurde ein Testverfahren inklusive Keimbelastung entwickelt, das den realen Bedingungen in der Toilette entspricht. Wie in der realen Toilette erfolgte die Wasserspülung aus einem Wassertank über der Testkachel durch das Öffnen eines Ventils. Die Krümmung der Toilettenschüssel wurde mittels einer schiefen Ebene mit einem Winkel von 45° und planaren Testkacheln der Fa. Villeroy & Boch (15x15 cm²) nachgestellt. Die Sprinkleranlage diente dazu, die Testkacheln möglichst homogen mit 150 ml sterilem Brauchwasser pro Sekunde zu benetzen. Pro Spülgang wurde in der Regel 900 ml Wasser verwendet. Die Testkachel wurde vor dem Versuch mit Ethanol behandelt, anschließend mit dem zu testenden Polymer versetzt (2 ml unverdünntes Polymer wurde mit Zellstoff auf der Kachel verrieben) und danach waagerecht zur Ausbildung des Polymerfilms für 60 Minuten bei Raumtemperatur getrocknet. Danach wurde die auf Schräge positionierte Kachel mit einer S. aureus-Suspension (10⁴ Keime in 100 ml Kochsalzlösung) homogen belastet und 10 min bei Raumtemperatur inkubiert. Zur Beurteilung der antiadhäsiven Wirkung wurde die Kachel mit sterilem Brauchwasser über die Sprinkleranlage benetzt. Zur Erfassung der verbliebenen Restkeimzahl auf der Kachel erfolgte nach dem Spülvorgang ein mittiger RODAC-Abklatsch auf der Kachel. Die Spülschritte inklusive der jeweils erneuten Keimanschmutzung und die damit verbundenen RODAC-Analysen wurden für jedes zu testende Polymer wiederholt, um die biorepulsive Wirkung auch nach mehrfacher Spülung (also Auslaugung) zu überprüfen. Die RODAC-Platten wurden über Nacht bei 37°C inkubiert und anschließend quantitativ ausgewertet.

Es wurde nach den Spülschritten überraschenderweise gefunden, dass durch bestimmte Polymere eine signifikante Verminderung der Adhäsion von Mikroorganismen an die Keramik auch über mehrere Spülschritte erreicht werden konnte. Trotz Auslaugung der Polymerschicht auf der Kacheloberfläche zeigte insbesondere das binäre AMPS/PEG-Polymer 9007-009 (Fig. 2, pro Spülschritt jeweils der rechte Balken) eine über 90%ige Verminderung der Keimanhaftung auch nach 10 Spülvorgängen. Das Polymer 8406-108 hingegen (pro Spülschritt jeweils der mittlere Balken) zeigte beim ersten Spülgang eine noch bessere Wirkung als 9007-009, jedoch ging diese Wirkung bereits beim zweiten Spülgang vollständig verloren, was darauf hindeutet, dass das Polymer mit dem ersten Spülgang vollständig abgewaschen wird.

### Beispiel 5: Anwendungsnaher Labortest im WC-Reaktor auf Keramik-Oberflächen

Parallel wurden die Keramik-Kacheln in einem fast automatisch laufenden, sehr anwendungsnahen WC-Reaktor untersucht, welcher vom Aufbau die Funktion einer Toilette simuliert. Dieses System erlaubt es, Adhäsion und Biofilmbildung in einem Testsystem auf mehreren unterschiedlichen Oberflächen über einen kurzen sowie längeren Zeitraum (hier: Gesamtlaufzeit von drei Tagen) zu untersuchen. Zudem handelt es sich im Gegensatz zum Mikrotiterplatten-System um ein dynamisches System, da laufend frisches Medium (TBY / DGHM-Wasser 1:50) über die Kacheln geleitet wird. Weiterhin fallen die Oberflächen phasenweise trocken und werden anschließend wieder mit Flüssigkeit überschichtet. Dieser Wechsel ähnelt sehr stark den Abläufen in einer Toilette, wo die Keramik-Oberflächen ebenfalls abwechselnd benetzt werden und wieder abtrocknen können. Die im Reaktor erzeugten Biofilme entsprechen hinsichtlich Stärke und Homogenität denen aus Mikrotiterplatten.
Der Reaktor wurde zunächst mit 680ml Medium befüllt und mit einem Keimgemisch, bestehend aus Dermacoccus nishinomiyaensis DSMZ 20448, Bradyrhizobium japonicum DSMZ 1982 und Xanthomonas campestris DSMZ 1526, welches in wässrigen Umgebungen einen stabilen Biofilm bildet, angeimpft. Die Inkubation erfolgte über Nacht, damit sich die Keimflora in dem System etablieren konnte. Wie in der realen Toilette erfolgte die Wasserspülung aus einem Vorratsgefäß durch das Öffnen eines Magnetventils, das wiederum über eine Zeitschaltuhr gesteuert wurde. Die Krümmung der Toilettenschüssel wurde durch Festklemmen der Kacheln mittels eines Adapters im Reaktorinnenraum nachgestellt. Pro Spülgang wurde in der Regel ca. 600 ml Wasser verwendet. Am ersten und zweiten Tag nach der Inkubation wurde jeweils 15 Mal gespült, wobei der einzelne Spülgang 20 Minuten dauerte. Die ersten Kacheln wurden morgens am ersten Tag entnommen, nachdem noch keine bzw. wenige Spülungen vorlagen. Die zweite Entnahme erfolgte am Nachmittag nach den Spülungen, über Nacht war der Reaktor mit Medium gefüllt, ohne dass Spülungen erfolgten. Die waagerecht platzierten Kacheln wurden vor Einspannen im Reaktor mit einem handelsüblichen WC-Reiniger enthaltend 10%ige Polymerlösung besprüht, wobei pro Kachel jeweils 6 Sprühstöße verwendet wurden. Die Keramik-Kacheln wurden nach Entnahme aus dem Reaktor bei Raumtemperatur getrocknet und anschließend mit je 6ml 0,01 %ige SafraninOLösung 15 Minuten angefärbt. Danach wurde die Färbelösung abgesaugt, mit bidestiliertem Wasser nicht-gebundener Farbstoff von den Kacheln entfernt und die gefärbten Kacheln getrocknet. Die angefärbten und getrockneten Oberflächen der Kacheln wurden eingescannt und mit Corel Draw Paint 9 ausgewertet. Die Ergebnisse für das Polymer 9007-009 sind in Fig. 3 im Vergleich zu einer unbehandelten Oberfläche sowie im Vergleich zu einer nur mit WC-Reiniger behandelten Oberfläche dargestellt. Es ist zu erkennen, dass der WC-Reiniger mit Polymer eine deutliche Reduktion des Biofilms nicht nur gegenüber der Kontrollkachel, die weder mit Polymer noch mit WC-Reiniger behandelt wurde, sondern auch gegenüber der Kachel, die nur mit WC-Reiniger behandelt wurde, bewirkt. Es war nach über 65h eine noch nahezu 70%ige Biofilm-Reduktion im Vergleich zur nicht beschichteten Kontrolle zu erkennen.

### Formulierungsbeispiele

### Rezeptur 1

### Wässrige Lösung enthaltend

1 Gew.-% eines Copolymers (vorzugsweise bestehend aus 20 Gew.% AMPS und 80 Gew.-% PEG-MA 2080), 3 Gew.-% Citronensäure, 0,5 Gew.-% Ameisensäure, 0,5 Gew.-% Kelzan ASX-T (Xanthan Gum von CP Kelco), 3 Gew.-% Ethanol, 1 Gew.% Texapon NSO (Laurylethersulfat, Natriumsalz von Cognis France SA.), 0,002 Gew.% Patent Blue (Farbstoff) und 0,02 Gew.-% eines Duftstoffs.

### Rezeptur 2

### Wässrige Lösung enthaltend

2 Gew.% eines Copolymers (vorzugsweise bestehend aus 20 Gew.% AMPS und 80 Gew.% PEG-MA 2080), 3 Gew.% Citronensäure, 2 Gew.% ethanol, 1 Gew.-% Texapon NSO (Laurylethersulfat, Natriumsalz von Cognis France SA.), 0,002 Gew.% Patent Blue (Farbstoff) und 0.02 Gew.% eines Duftstoffs.

### Rezeptur 3

### Wässrige Lösung enthaltend

1 Gew.-% eines Copolymers (vorzugsweise bestehend aus 20 Gew.-% AMPS und 80 Gew.-% PEG-MA 2080), 1 Gew.% Monoethanolamin (MEA), 2 Gew.% Ethanol, 0,6 Gew.-% Texapon LS 35 (Fettalkoholsulfat, Natriumsalz von Cognis Deutschland GmbH), 0,002 Gew.-% Patent Blue (Farbstoff) und 0,02 Gew.-% eines Duftstoffs.

### Abbildungen

In Fig. 1 sind die Ergebnisse des in Beispiel 3 beschriebenen Adhäsionsversuchs dargestellt. Die genannten Polymere wurden auf Kunststoffoberflächen aufgetragen und anschließend untersucht, wie stark die Adhäsion von *Staphylococcus aureus* im Vergleich zu einer unbehandelten Kunststoffoberfläche ist. Die Menge an adhärierten Bakterien wurde in Prozent dargestellt, wobei die Adhäsion an die unbehandelte Oberfläche auf 100 % gesetzt wurde.

In Fig. 2 sind die Ergebnisse des in Beispiel 4 beschriebenen Adhäsionsversuchs im anwendungsnahen Labortest mit *Staphylococcus aureus* auf mit Polymer beschichteten Keramik-Kacheln für die Polymere 9007-009 (jeweils rechter Balken) und 8406-108 (jeweils mittlerer Balken) im Vergleich zu einer nicht mit Polymer behandelten Referenz (jeweils linker Balken), die auf 100 % gesetzt wurde, dargestellt. Während mit dem Polymer 9007-009 auch nach drei Spülgängen noch eine deutliche Reduktion der Adhäsion von *Staphylococcus aureus* bewirkt werden konnte, zeigte das Polymer 8406-108 nur beim ersten Spülgang eine fast vollständige Reduktion der Adhäsion von *Staphylococcus aureus,* was dadurch zu erklären ist, dass das Polymer 8406-108 bereits im ersten Spülgang mit abgespült wird, während das Polymer 9007-009 semipermanent an der Oberfläche haftet.

In Fig. 3 sind die Ergebnisse des in Beispiel 5 beschriebenen Adhäsionsversuchs im anwendungsnahen Labortest mit einem Biofilm im WC-Reaktor auf Keramik-Oberflächen und unter Verwendung des Polymers 9007-009 dargestellt. Angegeben sind die Ergebnisse nach 41,5; 48 und 65,5 Stunden Inkubation. Die Menge an an die weder mit WC-Reiniger noch mit Polymer behandelten Kacheln adhärierten Zellen wurde jeweils auf 100 % gesetzt. Es ist zu erkennen, dass nach 48 und 65,5 Stunden Inkubation die Menge an an die mit Polymer-haltigem WC-Reiniger behandelten Kacheln adhärierten Zellen deutlich reduziert ist sowohl gegenüber den Kacheln, die weder mit WC-Reiniger noch mit Polymer behandelt wurden als auch gegenüber den Kacheln, die nur mit handelsüblichem WC-Reiniger behandelt wurden.
"K" bezeichnet jeweils die Kontrollkachel ohne Polymer und WC-Produkt; "WC" bezeichnet jeweils die nur mit handelsüblichem WC-Reiniger behandelte Kachel, "WC+P" bezeichnet jeweils die Kachel, die mit WC-Reinger enthaltend eine 10%ige Polymerlösung behandelt wurde.

## Patentansprüche

1. Verwendung eines Copolymers aus ethylenisch ungesättigten Monomeren zur Verminderung der Anhaftung von Mikroorganismen und/oder zur Verminderung der Ausbildung von Biofilmen an Oberflächen, **dadurch gekennzeichnet, dass** die copolymerisierten ethylenisch ungesättigten Monomere ausgewählt sind aus:
5 - 95 Gew.-% mindestens eines anionischen Vinylmonomers (A);
0 - 50 Gew.-% mindestens eines Vinylmonomers (B) umfassend eine sekundäre oder tertiäre Aminogruppe oder eine quaternäre Ammoniumgruppe;
5 - 95 Gew.-% mindestens eines nichtionischen hydrophilen Vinylmonomers (C); und/oder
0 - 15 Gew.% mindestens eines polyfunktionalen Vinylmonomers (F); sowie
0 - 30 Gew.% mindestens eines hydrophoben Vinylmonomers (D); und
0 - 20 Gew.% mindestens eines Vinylmonomers (E) enthaltend Silikogruppen;
wobei die Summe der Monomere (A), (B), (C), (D), (E) und (F) 100 Gew.-% beträgt.

2. Verwendung nach Anspruch 1, **dadurch gekennzeichnet, dass** die copolymerisierten ethylenisch ungesältigten Monomere ausgewählt sind aus:
65 - 95 Gew.% mindestens eines anionischen Vinylmonomers (A);
0 - 5 Gew.-% mindestens eines Vinylmonomers (B) umfassend eine sekundäre oder tertiäre Aminogruppe oder eine quaternäre Ammoniumgruppe;
5 - 25 Gew.-% mindestens eines nichtionischen hydrophilen Vinylmonomers (C); und/oder
0 - 2 Gew.-% mindestens eines polyfunktionalen Vinylmonomers (F); sowie
0 - 2 Gew.% mindestens eines hydrophoben Vinylmonomers (D); und
0 - 2 Gew.-% mindestens eines Vinylmonomers (E) enthaltend Silikogruppen;
wobei die Summe der Monomere (A), (B), (C), (D), (E) und (F) 100 Gew.-% beträgt.

3. Verwendung nach Anspruch 1, **dadurch gekennzeichnet, dass** die copolymerisierten ethylenisch ungesättigten Monomere ausgewählt sind aus
5 - 30 Gew.% mindestens eines anionischen Vinylmonomers (A);
0 - 5 Gew.-% mindestens eines Vinylmonomers (B) umfassend eine sekundäre oder tertiäre Aminogruppe oder eine quaternäre Ammoniumgruppe;
70 - 95 Gew.% mindestens eines nichtionischen hydrophilen Vinylmonomers (C); und/oder
0 - 2 Gew.% mindestens eines polyfunktionalen Vinylmonomers (F); sowie
0 - 2 Gew.% mindestens eines hydrophoben Vinylmonomers (D); und
0 - 2 Gew.-% mindestens eines Vinylmonomers (E) enthaltend Silikogruppen;
wobei die Summe der Monomere (A), (B), (C), (D), (E) und (F) 100 Gew.-% beträgt.

4. Verwendung nach einem der Ansprüche 2 oder 3, **dadurch gekennzeichnet, dass** die Summe der Monomere (A) und (C) mindestens 98 % beträgt.

5. Verwendung nach einem der Ansprüche 1 bis 4, **dadurch gekennzeichnet, dass** das Copolymer ein durchschnittliches Molgewicht von 10000 bis 1000000 g/mol aufweist.

6. Verwendung nach einem der Ansprüche 1 bis 5, **dadurch gekennzeichnet, dass**
- das anionische Vinylmonomer (A) ausgewählt ist aus der Gruppe bestehend aus Acrylsäure (AA); Methacrylsäure (MAA); einem Monomer der allgemeinen Formel (I) 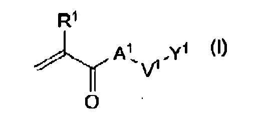 wobei R¹ für Wasserstoff, Methyl oder Ethyl steht, Y¹ für Sulfato oder Sulfonato steht, A¹ für O oder NH steht und V¹ für einen linearen oder verzweigten, gesättigten oder ungesättigten Kohlenwasserstoffrest mit 1 bis 15 C-Atomen steht; sowie einem Monomer gemäß Formel (II) 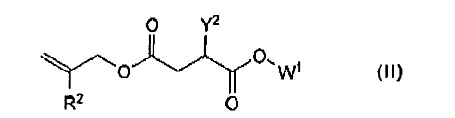 wobei R² für Wasserstoff. Methyl oder Ethyl steht, Y² für Sulfato oder Sulfonato steht, W¹ für einen linearen, verzweigten oder alicyclischen, gesättigten oder ungesättigten Kohlenwasserstoffrest mit 1 bis 20 C-Atomen steht;
sowie beliebigen Alkalisalzen, Ammoniumsalzen, Monoethanolaminsalzen sowie Triethylaminsalzen der zuvor genannten Verbindungen und vorzugsweise ausgewählt ist aus der Gruppe bestehend aus 2-Acrylamido-2-methylpropansulfonsäure (AMPS), Methacrylsäure (MAA) und Acrylsäure (AA);
- das Vinylmonomer mit sekundärer oder tertiärer Aminogruppe oder quaternärer Ammoniumgruppe (B) ausgewählt ist aus der Gruppe bestehend aus Monomeren der allgemeinen Formel (III) 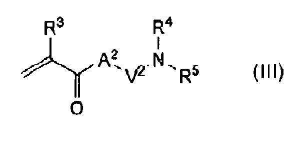 wobei R³ für Wasserstoff, Methyl oder Ethyl steht, A² für O oder NH steht. V² für einen linearen oder verzweigten, gesättigten oder ungesättigten Kohlenwasserstoffrest mit 1 bis 15 C-Atomen steht, R⁴ für Wasserstoff, Methyl, Ethyl, Propyl oder Butyl steht und R⁵ voneinander für Methyl, Ethyl, Propyl oder Butyl steht;
Monomeren der allgemeinen Formel (IV) 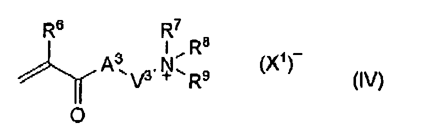 wobei R⁶ für Wasserstoff, Methyl oder Ethyl steht, A³ für O oder NH steht, V³ für einen linearen oder verzweigten, gesättigten oder ungesättigten Kohlenwasserstoffrest mit 1 bis 15 C-Atomen steht, X¹ ein Gegenion darstellt, R⁷, R⁶ und R⁹ unabhängig voneinanderfür Methyl oder Ethyl stehen; und
Monomeren der allgemeinen Formel (V) 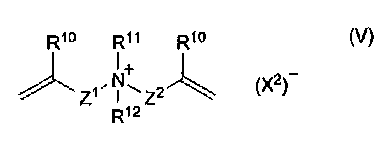 wobei die Reste R¹⁰ unabhängig voneinander für Wasserstoff, Methyl oder Ethyl stehen, R¹¹ und R¹² unabhängig voneinander für Methyl oder Ethyl stehen, X² ein Gegenion darstellt, und Z¹ und Z² unabhängig voneinander für Methylen, Ethylen oder lineares Propylen stehen;
vorzugsweise ist (B) ausgewählt aus der Gruppe bestehend aus Methacryl-amidopropyltrimethylammoniumchlorid (MAPTAC), Acrylamidopropyl-trimethyammoniumchlorid (AAPTAC), Dimethylaminoethyl-methacrylat (DM), Methacryloxy-aminoethyltrimethylammoniumchlorid (DMC), Dimethylaminopropylacrylamid (DMAPA) und Dimethylaminopropyl-methacrylamid (DMAPMA);
- es sich bei dem hydrophilen Vinylmonomer (C) um ein Monomer der allgemeinen Formel (VI) handelt 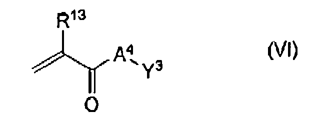 wobei R¹³ für Wasserstoff, Methyl oder Ethyl, vorzugsweise Methyl, steht, A⁴ für O oder NH, vorzugsweise O, steht, Y³ für [(CH₂)ₘ₁O]ₙ₁B¹ steht, wobei B¹ für Wasserstoff, Methyl oder Ethyl, vorzugsweise Methyl, steht, m¹ einen Wert von 2 bis 4, vorzugsweise 2, und n¹ einen Wert von 1 bis 60, vorzugsweise 9, 23 oder 45, annimmt und wobei für jede [(CH₂)ₘ₁O]-Gruppe der Wert für m¹ derselbe oder unterschiedlich sein kann;
- es sich bei dem hydrophoben Vinylmonomer (D) um ein Monomer der allgemeinen Formel (VII) handelt 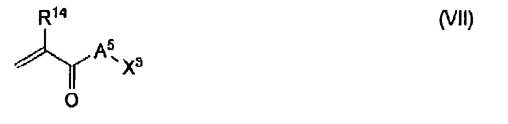 wobei R¹⁴ für Wasserstoff, Methyl oder Ethyl steht. A⁵ für O oder NH steht, und X³ für einen verzweigten oder unverzweigten, gesättigten oder ungesättigten Kohlenwasserstoffrest mit 1 bis 15 C-Atomen steht;
- es sich bei den Vinylmonomeren mit Silikongruppe (E) um Monomere der allgemeinen Formel (VIII) handelt 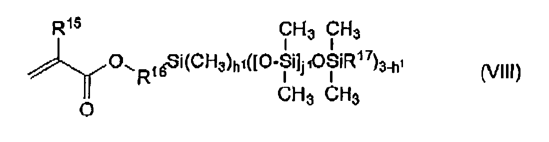 wobei R¹⁵ für Wasserstoff, Methyl oder Ethyl steht, R¹⁶ für einen linearen oder verzweigten gesättigten Kohlenwasserstoffrest mit 1 bis 6 C-Atomen, vorzugsweise für Methylen, Ethylen, Propylen oder Butylen, steht, wobei in dem Kohlenwasserstoffrest eine oder mehrere CH₂-Gruppen gegebenenfalls auch durch O substituiert sein können, R¹⁷ für einen linearen oder verzweigten, gesättigten oder ungesättigten Kohlenwasserstoffrest, vorzugsweise für einen linearen, gesättigten Kohlenwasserstoffrest mit 1 bis 30, vorzugsweise 1 bis 22 C-Atomen steht, wobei der Kohlenwasserstoffrest gegebenenfalls auch ein- oder mehrfach durch Fluor substituiert sein kann, und wobei h¹ 1 oder 2 ist und j¹ einen Wert von 0 bis 500, vorzugsweise 0 bis 300, annimmt;
- das polyfunktionale Vinylmonomer (F) ausgewählt ist aus der Gruppe bestehend aus den Monomeren der allgemeinen Formeln (IX), (X), (XI) und (XII) 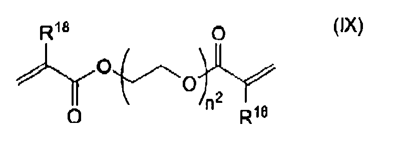 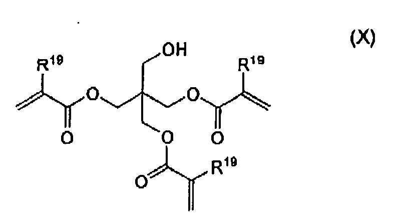 wobei in den allgemeinen Formeln (IX) und (X) R¹⁸ und R¹⁹ unabhängig voneinander für Wasserstoff, Methyl oder Ethyl stehen und n² eine Zahl von 1 bis 20 darstellt; 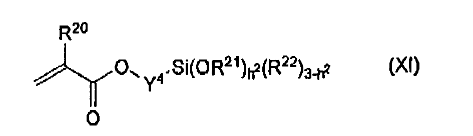 wobei in der allgemeinen Formel (XI) R²⁰ für Wasserstoff oder Methyl steht, R²¹ und R²² unabhängig voneinander für aliphatische Kohlenwasserstoffreste mit 1 bis 6 C-Atomen stehen, Y⁴ für einen aliphatischen Kohlenwasserstoffrest mit 1 bis 6 C-Atomen steht und h² 1, 2 oder 3 ist; 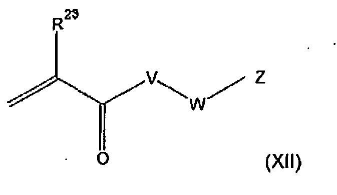 wobei in der allgemeinen Formel (XII) R²³ für Wasserstoff, Methyl oder Ethyl steht, V für O oder NH steht, W für einen Kohlenwasserstoffrest mit 1 bis 15 C-Atomen steht, Z für OR²⁴, NHR²⁴, COOH, Br, Epoxyethylen oder NCO steht und R²⁴ für Wasserstoff oder einen Kohlenwasserstoffrest mit 1 bis 6 C-Atomen steht.

7. Verwendung nach einem der vorhergehenden Ansprüche, **dadurch gekennzeichnet, dass** das Copolymer ausschließlich durch Copolymerisation ethylenisch ungesättigter Monomere (A) und (C) erhalten wurde.

## Claims

1. Use of a copolymer of ethylenically unsaturated monomers for the reduction of the adhesion of microorganisms and/or for the reduction of the development of biofilms on surfaces, wherein the copolymerized ethylenically unsaturated monomers are selected from:
5 - 95 wt.% of at least one anionic vinyl monomer (A);
0 - 50 wt.% of at least one vinyl monomer (B) containing a secondary or tertiary amino group or a quaternary ammonium group;
5 - 95 wt.% of at least one non-ionic hydrophilic vinyl monomer (C); and/or
0 - 15 wt.% of at least one polyfunctional vinyl monomer (F); as well as
0 - 30 wt.% of at least one hydrophobic vinyl monomer (D); and
0 - 20 wt.% of at least one vinyl monomer (E) comprising silicone groups;
wherein the sum of the monomers (A), (B), (C), (D), (E) and (F) is 100 wt.%.

2. The use according to claim 1, wherein the copolymerized ethylenically unsaturated monomers are selected from:
65 - 95 wt.% of at least one anionic vinyl monomer (A);
0 - 5 wt.% of at least one vinyl monomer (B) containing a secondary or tertiary amino group or a quaternary ammonium group;
5 - 25 wt.% of at least one non-ionic hydrophilic vinyl monomer (C); and/or
0 - 2 wt.% of at least one polyfunctional vinyl monomer (F); as well as
0 - 2 wt.% of at least one hydrophobic vinyl monomer (D); and
0 - 2 wt.% of at least one vinyl monomer (E) comprising silicone groups;
wherein the sum of the monomers (A), (B), (C), (D), (E) and (F) is 100 wt.%.

3. The use according to claim 1, wherein the copolymerized ethylenically unsaturated monomers are selected from:
5 - 30 wt.% of at least one anionic vinyl monomer (A);
0 - 5 wt.% of at least one vinyl monomer (B) containing a secondary or tertiary amino group or a quaternary ammonium group;
70 - 95 wt.% of at least one non-ionic hydrophilic vinyl monomer (C); and/or
0 - 2 wt.% of at least one polyfunctional vinyl monomer (F); as well as
0 - 2 wt.% of at least one hydrophobic vinyl monomer (D); and
0 - 2 wt.% of at least one vinyl monomer (E) comprising silicone groups;
wherein the sum of the monomers (A), (B), (C), (D), (E) and (F) is 100 wt.%.

4. The use according to one of claims 2 or 3, wherein the sum of the monomers (A) and (C) is at least 98 %.

5. The use according to one of claims 1 to 4, wherein the average molecular weight of the copolymer is from 10 000 to 1 000 000 g/mol.

6. The use according to one of claims 1 to 5 wherein
- the anionic vinyl monomer (A) is selected from the group consisting of acrylic acid (AA), methacrylic acid (MAA); a monomer of the general Formula (I) 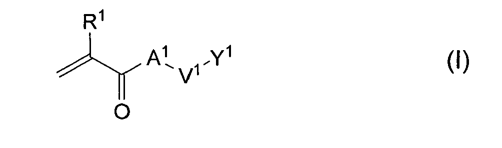 wherein, R¹ stands for hydrogen, methyl or ethyl, Y¹ for sulfato or sulfonato, A¹ for O or NH and V¹ for a linear or branched, saturated or unsaturated hydrocarbon group containing 1 to 15 carbon atoms; as well as a monomer according to Formula (II) 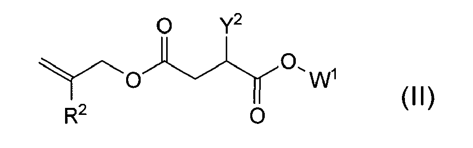 wherein, R² stands for hydrogen, methyl or ethyl, Y² for sulfato or sulfonato, W¹ for a linear, branched or alicyclic, saturated or unsaturated hydrocarbon group containing 1 to 20 carbon atoms;
as well as any alkali metal salts, ammonium salts, monoethanolamine salts as well as trimethylamine salts of the previously cited compounds and preferably selected from the group consisting of 2-acrylamido-2-methylpropane sulfonic acid (AMPS), methacrylic acid (MAA) and acrylic acid (AA);
- the vinyl monomer containing secondary or tertiary amino groups or quaternary ammonium groups (B) is selected from the group consisting of monomers of the general Formula (III) 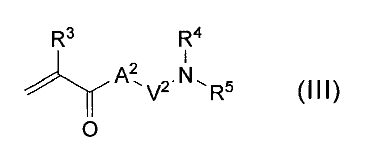 wherein R³ stands for hydrogen, methyl or ethyl, A² for O or NH and V² for a linear or branched, saturated or unsaturated hydrocarbon group containing 1 to 15 carbon atoms, R⁴ stands for hydrogen, methyl, ethyl, propyl or butyl and R⁵ independently stands for methyl, ethyl, propyl or butyl;
monomers of the general formula (IV) 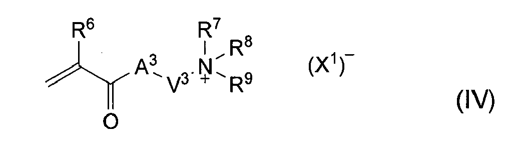 wherein R⁶ stands for hydrogen, methyl or ethyl, A³ for O or NH, V³ for a linear or branched, saturated or unsaturated hydrocarbon group containing 1 to 15 carbon atoms, X¹ represents a counter ion, R⁷, R⁸ and R⁹ independently of one another stand for methyl or ethyl; and
monomers of the general Formula (V) 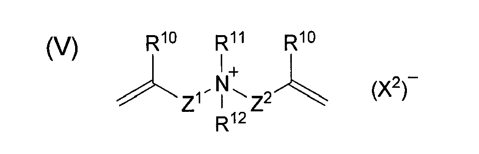 wherein the groups R¹⁰ independently of one another stand for hydrogen, methyl or ethyl, R¹¹ and R¹² independently of one another stand for methyl or ethyl, X² represents a counter ion, and Z¹ and Z² independently of one another stand for methylene, ethylene or linear propylene; preferably, (B) is selected from the group consisting of methacrylamidopropyl-trimethylammonium chloride (MAPTAC), acrylamidopropyl-trimethylammonium chloride (AAPTAC),
dimethylaminoethyl methacrylate (DM), methacryloxyaminoethyltrimethylammonium chloride (DMC), dimethylaminopropylacrylamide (DMAPA) and dimethylaminopropylmethacrylamide (DMAPMA);
- the hydrophilic vinyl monomer (C) is a monomer of the general Formula (VI) 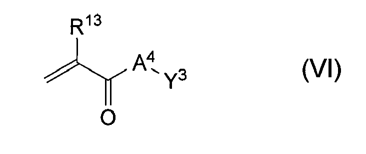 wherein R¹³ stands for hydrogen, methyl or ethyl, preferably methyl, A⁴ stands for O or NH, preferably O, Y³ stands for [(CH₂)ₘ₁O]ₙ₁B¹, wherein B¹ stands for hydrogen, methyl or ethyl, preferably methyl, m¹ assumes a value from 2 to 4,
preferably 2, and n¹ a value from 1 to 60, preferably 9, 23 or 45, and wherein for each [(CH₂)ₘ₁O] group the value for m¹ can be the same or different;
- the hydrophobic vinyl monomer (D) is a monomer of the general Formula (VII) 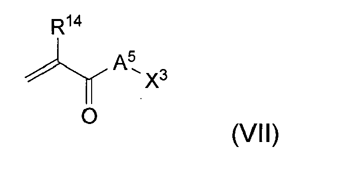 wherein R¹⁴ stands for hydrogen, methyl or ethyl, A⁵ for O or NH, and X³ for a linear or branched, saturated or unsaturated hydrocarbon group containing 1 to 15 carbon atoms;
- the vinyl monomers with a silicone group (E) are monomers of the general Formula (VIII) 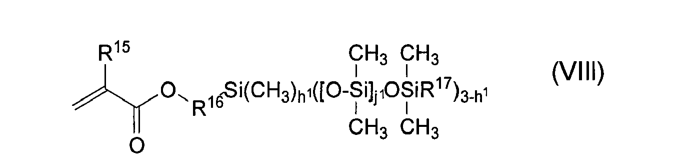 wherein R¹⁵ stands for hydrogen, methyl or ethyl, R¹⁶ for a linear or branched, saturated hydrocarbon group containing 1 to 6 carbon atoms, preferably for methylene, ethylene, propylene or butylene, wherein one or more CH₂ groups in the hydrocarbon group can also optionally be substituted by O, R¹⁷ stands for a linear or branched, saturated or unsaturated hydrocarbon group,
preferably for a linear, saturated hydrocarbon group containing 1 to 30, preferably 1 to 22 carbon atoms, wherein the hydrocarbon group can optionally also be mono- or polysubstituted by fluorine, and wherein h¹ is 1 or 2 and j¹ assumes a value of 0 to 500, preferably 0 to 300;
- the polyfunctional vinyl monomer (F) is selected from the group consisting of the monomers of the general Formulas (IX), (X), (XI) and (XII) 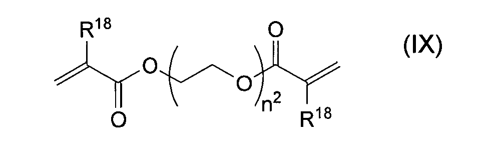 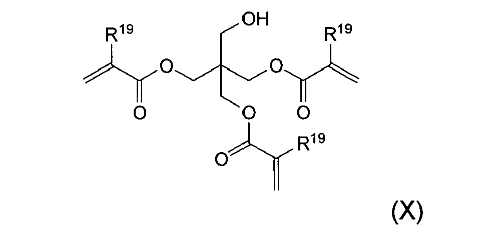 wherein in the general Formulas (IX) and (X) R¹⁸ and R¹⁹, each independently of one another, stand for hydrogen, methyl or ethyl and n² represents a number from 1 to 20; 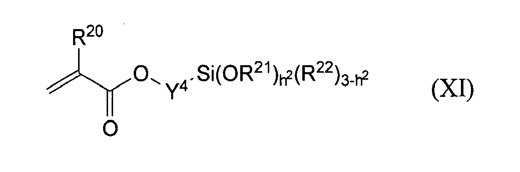 wherein in the general Formula (XI) R²⁰ stands for hydrogen or methyl, R²¹ and R²² independently of one another stand for aliphatic hydrocarbon groups containing 1 to 6 carbon atoms, Y⁴ stands for an aliphatic hydrocarbon group containing 1 to 6 carbon atoms and h² is 1, 2 or 3; 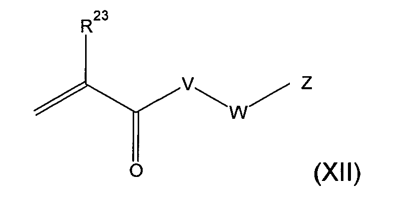 wherein in the general Formula (XII), R²³ stands for hydrogen, methyl or ethyl, V for O or NH, W for a hydrocarbon group containing 1 to 15 carbon atoms, Z for OR²⁴, NHR²⁴, COOH, Br, epoxyethylene or NCO and R²⁴ for hydrogen or a hydrocarbon group containing 1 to 6 carbon atoms.

7. The use according to one of the preceding claims, wherein the copolymer was exclusively obtained by copolymerization of ethylenically unsaturated monomers (A) and (C).

## Revendications

1. Utilisation d'un copolymère de monomères à insaturation éthylénique pour la réduction de l'adhérence de micro-organismes et/ou pour la réduction de la formation de biofilms sur des surfaces, **caractérisée en ce que** les monomères copolymérisés à insaturation éthylénique sont choisis parmi :
de 5 à 95 % en poids d'au moins un monomère vinylique anionique (A) ;
de 0 à 50 % en poids d'au moins un monomère vinylique (B) comprenant un groupe amino secondaire ou tertiaire ou un groupe d'ammonium quaternaire ;
de 5 à 95 % en poids d'au moins un monomère vinylique hydrophile non ionique (C) ; et/ou
de 0 à 15 % en poids d'au moins un monomère vinylique polyfonctionnel (F) ; ainsi que
de 0 à 30 % en poids d'au moins un monomère vinylique hydrophobe (D) ; et
de 0 à 20 % en poids d'au moins un monomère vinylique (E) contenant des groupes de silicium ;
la somme des monomères (A), (B), (C), (D), (E) et (F) représentant 100 % en poids.

2. Utilisation selon la revendication 1, **caractérisée en ce que** les monomères copolymérisés à insaturation éthylénique sont choisis parmi :
de 65 à 95 % en poids d'au moins un monomère vinylique anionique (A) ;
de 0 à 5 % en poids d'au moins un monomère vinylique (B) comprenant un groupe amino secondaire ou tertiaire ou un groupe d'ammonium quaternaire ;
de 5 à 25 % en poids d'au moins un monomère vinylique hydrophile non ionique (C) ; et/ou
de 0 à 2 % en poids d'au moins un monomère vinylique polyfonctionnel (F) ; ainsi que
de 0 à 2 % en poids d'au moins un monomère vinylique hydrophobe (D) ; et
de 0 à 2 % en poids d'au moins un monomère vinylique (E) contenant des groupes de silicium ;
la somme des monomères (A), (B), (C), (D), (E) et (F) représentant 100 % en poids.

3. Utilisation selon la revendication 1, **caractérisée en ce que** les monomères copolymérisés à insaturation éthylénique sont choisis parmi :
de 5 à 30 % en poids d'au moins un monomère vinylique anionique (A) ;
de 0 à 5 % en poids d'au moins un monomère vinylique (B) comprenant un groupe amino secondaire ou tertiaire ou un groupe d'ammonium quaternaire ;
de 70 à 95 % en poids d'au moins un monomère vinylique hydrophile non ionique (C) ; et/ou
de 0 à 2 % en poids d'au moins un monomère vinylique polyfonctionnel (F) ; ainsi que
de 0 à 2 % en poids d'au moins un monomère vinylique hydrophobe (D) ; et
de 0 à 2 % en poids d'au moins un monomère vinylique (E) contenant des groupes de silicium ;
la somme des monomères (A), (B), (C), (D), (E) et (F) représentant 100 % en poids.

4. Utilisation selon l'une quelconque des revendications 2 ou 3, **caractérisée en ce que** la somme des monomères (A) et (C) représente au moins 98 % en poids.

5. Utilisation selon l'une quelconque des revendications 1 à 4, **caractérisée en ce que** le copolymère présente un poids molaire moyen de 10.000 à 1.000.000 g/mol.

6. Utilisation selon l'une quelconque des revendications 1 à 5, **caractérisée en ce que**:
- le monomère vinylique anionique (A) est choisi parmi le groupe constitué par l'acide acrylique (AA), l'acide méthacrylique (MAA), un monomère répondant à la formule générale (I) : 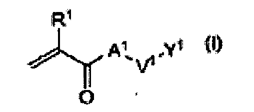 dans laquelle R¹ représente un atome d'hydrogène, un groupe méthyle ou un groupe éthyle, Y¹ représente un groupe sulfato ou un groupe sulfonato, A¹ représente un atome d'oxygène ou un groupe NH et V¹ représente un résidu d'hydrocarbure linéaire ou ramifié, saturé ou insaturé contenant de 1 à 15 atomes de carbone ; et un monomère répondant à la formule (II) : 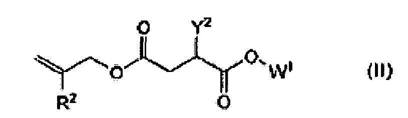 dans laquelle R² représente un atome d'hydrogène, un groupe méthyle ou un groupe éthyle, Y² représente un groupe sulfato ou un groupe sulfonato, W¹ représente un résidu d'hydrocarbure linéaire, ramifié ou alicyclique, saturé ou insaturé contenant de 1 à 20 atomes de carbone ; ainsi que n'importe quels sels de métaux alcalins, n'importe quels sels d'ammonium, n'importe quels sels de monoéthanolamine et n'importe quels sels de triéthylamine des composés mentionnés ci-dessus ; et à titre préférentiel est choisi parmi le groupe constitué par l'acide 2-acrylamido-2-méthyl-propanesulfonique (AMPS), l'acide méthacrylique (MAA) et l'acide acrylique (AA) ;
- le monomère vinylique comprenant un groupe amino secondaire ou tertiaire ou un groupe d'ammonium quaternaire (B) est choisi parmi le groupe constitué par des monomères répondant à la formule générale (III) : 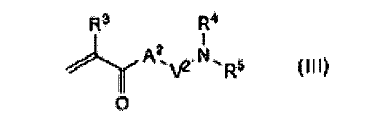 dans laquelle R³ représente un atome d'hydrogène, un groupe méthyle ou un groupe éthyle, A² représente un atome d'oxygène ou un groupe NH, V² représente un résidu d'hydrocarbure linéaire ou ramifié, saturé ou insaturé contenant de 1 à 15 atomes de carbone, R⁴ représente un atome d'hydrogène, un groupe méthyle, un groupe éthyle, un groupe propyle ou un groupe butyle et R⁵ représente un groupe méthyle, un groupe éthyle, un groupe propyle ou un groupe butyle ;
par des monomères répondant à la formule générale (IV) : 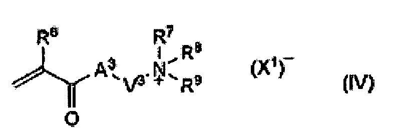 dans laquelle R⁶ représente un atome d'hydrogène, un groupe méthyle ou un groupe éthyle, A³ représente un atome d'oxygène ou un groupe NH, V³ représente un résidu d'hydrocarbure linéaire ou ramifié, saturé ou insaturé contenant de 1 à 15 atomes de carbone, X¹ représente un ion antagoniste, R⁷, R⁸ et R⁹ représentent, indépendamment l'un de l'autre, un groupe méthyle ou un groupe éthyle ; et
par des monomères répondant à la formule générale (V) : 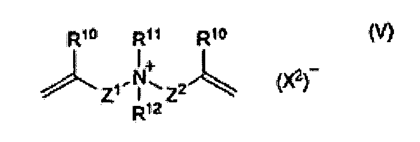 dans laquelle les résidus R¹⁰ représentent, indépendamment l'un de l'autre, un atome d'hydrogène, un groupe méthyle ou un groupe éthyle, R¹¹ et R¹² représentent, indépendamment l'un de l'autre, un groupe méthyle ou un groupe éthyle, X² représente un ion antagoniste, et Z¹ et Z² représentent, indépendamment l'un de l'autre, un groupe méthylène, un groupe éthylène ou un groupe propylène linéaire ; à titre préférentiel (B) est choisi parmi le groupe constitué par le chlorure de méthacryl-amidopropyl-triméthylammonium (MAPTAC), le chlorure d'acrylamidopropyl-triméthylammonium (AAPTAC), le méthacrylate de diméthylaminoéthyle (DM), le chlorure de méthacryloxy-aminoéthyl-triméthylammonium (DMC), le diméthylaminopropylacrylamide (DMAPA) et le diméthylaminopropylméthacrylamide (DMAPMA) ;
- en ce qui concerne le monomère vinylique hydrophile (C), il s'agit d'un monomère répondant à la formule générale (VI) : 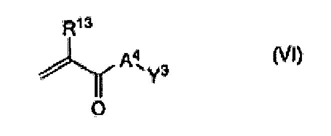 dans laquelle R¹³ représente un atome d'hydrogène, un groupe méthyle ou un groupe éthyle, de préférence un groupe méthyle, A⁴ représente un atome d'oxygène ou un groupe NH, de préférence un atome d'oxygène, Y³ représente un groupe [(CH₂)ₘ₁O]ₙ₁B¹ dans lequel B¹ représente un atome d'hydrogène, un groupe méthyle ou un groupe éthyle, de préférence un groupe méthyle, m¹ prend une valeur de 2 à 4, de préférence 2, et n¹ prend une valeur de 1 à 60, de préférence 9, 23 ou 45, et pour chaque groupe [(CH₂)ₘ₁O], la valeur pour m¹ peut être identique ou différente ;
- en ce qui concerne le monomère vinylique hydrophobe (D), il s'agit d'un monomère répondant à la formule générale (VII) : 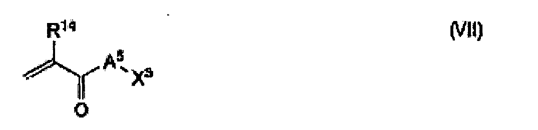 dans laquelle R¹⁴ représente un atome d'hydrogène, un groupe méthyle ou un groupe éthyle, A⁵ représente un atome d'oxygène ou un groupe NH, et X³ représente un résidu d'hydrocarbure linéaire ou ramifié, saturé ou insaturé contenant de 1 à 15 atomes de carbone ;
- en ce qui concerne les monomères vinyliques comprenant des groupes de silicium (E), il s'agit de monomères répondant à la formule générale (VIII) : 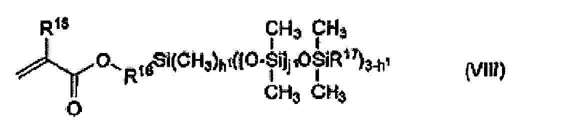 dans laquelle R¹⁵ représente un atome d'hydrogène, un groupe méthyle ou un groupe éthyle, R¹⁶ représente un résidu d'hydrocarbure saturé, linéaire ou ramifié contenant de 1 à 6 atomes de carbone, de préférence un groupe méthylène, un groupe éthylène, un groupe propylène ou un groupe butylène, un ou plusieurs groupes CH₂ dans le résidu d'hydrocarbure pouvant également être substitués de manière facultative par un atome d'oxygène, R¹⁷ représente un résidu d'hydrocarbure linéaire ou ramifié, saturé ou insaturé, de préférence un résidu d'hydrocarbure saturé linéaire contenant de 1 à 30, de préférence de 1 à 22 atomes de carbone, le résidu d'hydrocarbure pouvant également être substitué de manière facultative une ou plusieurs fois par un atome de fluor, et h¹ étant égal à 1 ou 2, et j¹ prenant une valeur de 0 à 500, de préférence de 0 à 300 ;
- le monomère vinylique polyfonctionnel (F) est choisi parmi le groupe constitué par les monomères répondant aux formules générales (IX), (X), (XI) et (XII) 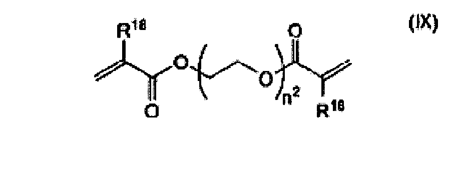 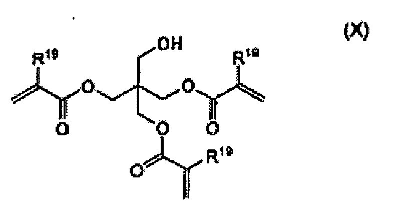 dans les formules générales (IX) et (X), R¹⁸ et R¹⁹ représentent, indépendamment l'un de l'autre, un atome d'hydrogène, un groupe méthyle ou un groupe éthyle et n² représente un nombre de 1 à 20 ; 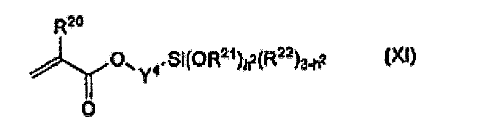 dans la formule générale (XI), R²⁰ représente un atome d'hydrogène ou un groupe méthyle, R²¹ et R²² représentent, indépendamment l'un de l'autre, des résidus d'hydrocarbures aliphatiques contenant de 1 à 6 atomes de carbone, Y⁴ représente un résidu d'hydrocarbure aliphatique contenant de 1 à 6 atomes de carbone, et h² est égal à 1, 2 ou 3 ; 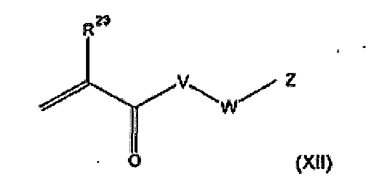 dans la formule générale (XII), R²³ représente un atome d'hydrogène, un groupe méthyle ou un groupe éthyle, V représente un atome d'oxygène ou un groupe NH, W représente un résidu d'hydrocarbure contenant de 1 à 15 atomes de carbone, Z représente un groupe OR²⁴, un groupe NHR²⁴, un groupe COOH, un atome de brome, un groupe époxyéthylène ou un groupe NCO, et R²⁴ représente un atome d'hydrogène ou un résidu d'hydrocarbure contenant de 1 à 6 atomes de carbone.

7. Utilisation selon l'une quelconque des revendications précédentes, **caractérisée en ce qu'**on obtient le copolymère exclusivement par copolymérisation des monomères à insaturation éthylénique (A) et (C).
